(19) Europäisches Patentamt / European Patent Office / Office européen des brevets

(11) EP 2 462 424 B1

# (12) EUROPEAN PATENT SPECIFICATION

(45) Date of publication and mention of the grant of the patent:
**04.05.2016 Bulletin 2016/18**

(21) Application number: **10742966.4**

(22) Date of filing: **04.08.2010**

(51) Int Cl.:
***G01N 9/00*** *(2006.01)*

(86) International application number:
**PCT/US2010/044413**

(87) International publication number:
**WO 2011/017433 (10.02.2011 Gazette 2011/06)**

## (54) SYSTEM AND METHODS FOR DETERMINING A VIRTUAL DENSITY OF A POLYMER

SYSTEM UND VERFAHREN ZUR BESTIMMUNG EINER VIRTUELLEN DICHTE EINES POLYMERS

SYSTÈMES ET PROCÉDÉS POUR LA DÉTERMINATION D'UNE DENSITÉ VIRTUELLE D'UN POLYMÈRE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **07.08.2009 US 462713**

(43) Date of publication of application:
**13.06.2012 Bulletin 2012/24**

(73) Proprietor: **Chevron Phillips Chemical Company LP**
**The Woodlands, Texas 77380 (US)**

(72) Inventors:
- **DESLAURIERS, Paul, J**
  **Owasso**
  **OK 74005 (US)**
- **ROHLFING, David, C.**
  **Bloomington**
  **Indiana 47408 (US)**

(74) Representative: **Potter Clarkson LLP**
**The Belgrave Centre**
**Talbot Street**
**Nottingham NG1 5GG (GB)**

(56) References cited:
**US-A1- 2007 298 508 US-B1- 6 632 680**

- **J,C. MAJESTE ET AL.: "Viscoelasticity of low molecular weight polymers and the transition to the entangled regine", RHEOL. ACTA, vol. 37, 31 December 1998 (1998-12-31), pages 486-499, XP002610720,**

EP 2 462 424 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

FIELD OF THE INVENTION

The present invention relates generally to polymer characterization as applied to resin development and more particularly, predicting the virtual density of a polymer or various virtual polymer properties related to density as a means to design resins for particular end-use applications that require various mechanical and physical properties.

BACKGROUND

This section is intended to provide background information to facilitate a better understanding of the various aspects of the present invention. Accordingly, these statements are to be read in this light and not as admissions of prior art.

The development of polymerization techniques have resulted in annual production of over 280 billion pounds worldwide of numerous polymers that are incorporated into various end-use products. Polyolefins, nylon, polystyrene, polyester, polyvinyl alcohol (PVC) and polyurethanes are a few of the polymers that are incorporated into products that can be used for retail and pharmaceutical packaging, food and beverage packaging, household and industrial containers, appliances, furniture, carpeting, automobile components, pipes, drums, fuel tanks, geomembranes, conduits, and various other industrial and consumer products.

Polymers are formed by linking small molecules (monomers) into chains during polymerization when monomers become chemically bonded to other monomers to form polymer chains. If only one kind of monomer is polymerized the polymer is called a homopolymer. The polymerization of a mixture of two or more different monomers leads to the formation of a copolymer, where the two monomers have entered the chain. Polymerization can occur in any suitable polymerization reactor, including but not limited to a liquid-phase reactor, a loop slurry reactor, or a gas-phase reactor.

Polymers are chemically described by degree of polymerization, Molecular Weight (MW), Molecular Weight Distribution (MWD), the Polydispersity Index (PDI), Short Chain Branching (SCB) due to copolymer distribution, the degree of branching and the SCB Distribution (SCBD), crystallinity and thermal properties.

During polymerization the molecules of a polymer may grow to different sizes which results in a polymer MW that is really an average of the variation of the weights of the molecules in the chain. For example, the MW of polyethylene is usually expressed as weight average molecular weight ($M_w$) or number average molecular weight ($M_n$). $M_n$ may be defined as the total weight of all molecules divided by the number of molecules. Mathematically, $M_n$ is defined as given below where $M_i$ is molecular weight at a particular mole (xi) or weight (wi) fraction.

$$\overline{M}_n = \frac{\sum x_i M_i}{\sum x_i} = \frac{\sum w_i}{\sum (w_i / M_i)}$$

If the weight of each MW species in the sample is taken into account rather than the number of molecules of a particular weight as with $M_n$, the weight average molecular weight $M_w$ is used to describe the polymer MWD. The $M_w$ is the sum of the total weights multiplied by their respective weights divided by the total weight of all molecules. Mathematically, $M_w$ is expressed as given below where $M_i$ is molecular weight at a particular mole (xi) or weight (wi) fraction.

$$\overline{M}_w = \frac{\sum x_i M_i^2}{\sum x_i M_i} = \frac{\sum w_i M_i}{\sum w_i}$$

MW significantly affects performance properties of a polymer. For example in polyolefins as $M_w$ increases, the melt viscosity, tensile strength, impact strength and environmental stress cracking resistance increase, while the melt index decreases. $M_w$ can be measured by various methods including solution light scattering and gel permeation chromatography (GPC).

The MWD in a polymer describes the relationship between the number of molecules of each polymer and the MW. A polymer typically consists of a distribution of molecular sizes because chain growth varies over the time span of polymerization and the way the monomers join the chain. Different types of polymerization processes and the use of different catalysts will lead to different MWD profiles. The shape of the MWD curve can be broad or narrow and may have one or more peaks. The MWD can be determined by GPC and by various fractionation techniques including selective solubilization.

The ratio of the $M_w$ to the $M_n$ is called the polydispersity index (PDI) and can be used to express the width or breadth of the MWD. The breadth of the curve increases as the PDI number increases. PDI has a value always greater than 1 but as polymer chains approach uniform chain length, the PDI approaches unity.

As polymer chains develop they may be arranged in an orderly manner where the polymer is crystalline, or they may form a tangled structure resulting in an amorphous polymer. Most polymers are semi-crystalline which means they contain both crystalline and amorphous regions. Mostly amorphous polymers will be less dense than mostly crystalline polymers. The density of the polymer will increase with the increase in crystallinity and decrease as crystallinity decreases.

The polymer architecture relates to the physical arrangement of monomers along the backbone of the chain. The simplest architecture is a linear chain, a single backbone without branches. Branches can be long chain branches or short chain branches. The size and length of the branches affects the physical polymer properties. For example, polymers with the same $M_w$ will have different properties depending upon the type and number of branches. Copolymers have SCB that can be organized along the backbone in a variety of ways of SCBD. The SCB hinder crystal development somewhat and the lower crystallinity is manifested in lower density. As density changes with the number and type of branching, physical properties are affected. For example, as density increases, tensile strength, stiffness and hardness increase while elongation, environmental stress crack resistance and permeability decrease. Therefore density is an important polymer property.

Manufacturers attempt to design resins to meet the specifications for various physical and mechanical properties by adjusting conditions within the polymerization reactor, selecting the type of catalyst or co-catalyst used for the polymerization reaction, or compounding or blending resins with additives or other resins. Traditionally, in order to determine a value of a desired physical or chemical property, a certain quantity of the particular polymer resin was needed to fabricate an article or a test specimen, and then the resulting article or test specimen was subsequently tested via the prescribed analytical test procedure to determine the value of the property. This procedure is cumbersome not only due to the time required for fabricating, but also the time required to perform the respective analytical test procedure. Further, the traditional method, depending upon the particular test, could require large amounts of polymer, often more than could be produced in small-scale research laboratory or pilot plant apparatus.

Hence, there exists a need for methods of virtually determining a value of a desired polymer property without fabricating samples or performing the analytical test for the physical or chemical property.

US 2007/298508 discloses several methods of determining values of physical or chemical properties of polymers. In these methods, at least two polymer training samples are provided. Characteristics of the polymer microstructures of the training samples are correlated with values of physical or chemical properties of the training samples. These correlations are subsequently applied to the respective characteristics of polymer test samples in order to determine the values of physical or chemical properties of the test samples.

US 6632680 relates to a method of determining the proportion of short-chain branching in an olefin copolymer process stream. The short-chain branching may also be determined as a function of molecular weight in a sample having a range of molecular weights. In the method, at least two olefin copolymer training samples are provided. The respective samples have different, known proportions of short-chain branching. The infrared (e.g. FT-IR) absorbance spectra of the training samples in a wavenumber range are obtained. Calibration information is determined from the training samples by chemometrically correlating the differences in the infrared absorbance spectra of the training samples to the differences in the degree of short-chain branching in the training samples. This step generates calibration information that allows the degree of short-chain branching in a sample to be determined once its infrared absorbance spectrum is obtained.

J C Majeste et al, Rheol Acta, vol 37, 31 December 1998, pages 486-499 describes the viscoelasticity of unentangled low molecular weight polymers in polystyrene melts and the transition to the entangled regime.

## BRIEF SUMMARY OF THE INVENTION

The present invention discloses methods for determining a virtual polymer property wherein the polymer property is related to polymer microstructure. Various aspects of the invention include determination of virtual density values using algorithms or equations that relate to the MW, MWD, and SCB of the polymer. In some aspects, software applications perform the analysis and in other aspects the software is included in systems that analyze data and report results.

According to the invention, there is provided a method as defined in the appended Claim 1.

Also disclosed herein is a method in which a virtual density of a polymer is determined by relating the density of a polymer to the MW and MWD profile of the polymer. This method to determine a virtual density of a polymer comprises:

a) determine a plurality of density values as a function of a Molecular Weight (MW) and a Molecular Weight Distribution (MWD) profile of the polymer wherein each of the plurality of density values is determined at a different MW location across the MWD profile; and

b) sum the plurality of density values to obtain the virtual density; wherein the MW and the MWD comprise data obtained as measured properties, data provided as a digitally determined value, data obtained by curve fitting the data obtained as measured properties, data provided as an arbitrarily assigned value or a combination thereof.

In another method disclosed herein, the MW, MWD and SCB are used to determine a virtual density and are applicable to copolymers. This method to determine a virtual density of a polymer having short chain branches (SCB) comprises:

a) determine a plurality of density values as a function of a Molecular Weight (MW) and a Molecular Weight Distribution (MWD) profile of the polymer wherein each of the plurality of density values is determined at a different MW location across the MWD profile; and
b) adjust the plurality of density values for a SCB contribution to density suppression to obtain an adjusted density value; and
c) sum the adjusted density values to obtain a virtual density; wherein the SCB, MW and the MWD comprise data obtained as measured properties, data provided as a digitally determined value, data obtained by curve fitting the data obtained as measured properties, data provided as an arbitrarily assigned value or a combination thereof.

A further method uses inventive algorithms or equations to determine a virtual density of a polymer using MW and MWD relationships to density. In this aspect a method to determine a virtual density of a polymer comprises:

a) determine a calculated density value for each Molecular Weight (MW) across a Molecular Weight Distribution profile of the polymer using an equation:

$$\rho = [a - bLogM]$$

to obtain a plurality of calculated density values;
wherein coefficients *a* and *b* are determined by a least square fit to a data set of logM and measured density values; and
b) sum the plurality of calculated density values of step a) using an equation:

$$1/\rho = \sum (w_i/\rho_i) = \int \frac{1}{\rho}\left(\frac{dw}{dlogM}\right) dlogM$$

where: $\rho = [a - bLogM]$
to obtain the virtual density;
wherein the MW and the MWD comprise data obtained as measured properties, data provided as a digitally determined value, data obtained by curve fitting the data obtained as measured properties, data provided as an arbitrarily assigned value or a combination thereof.

A further method using inventive equations also includes SCB and PDI of the polymer so that the density suppression due to SCB in copolymers is taken into account. A method to determine a virtual density of a polymer having short chain branching (SCB) comprises:

a) determine a calculated density value for each Molecular Weight (MW) across a Molecular Weight Distribution profile of the polymer using an equation:

$$\rho = [a - bLogM]$$

to obtain a plurality of calculated density values;
wherein coefficients *a* and *b* are determined by a least square fit to a data set of logM and measured density values; and
b) correlate a suppression of the plurality of calculated density values with an incorporation of SCB in relation to a PDI of the polymer using an equation:

$$\Delta\rho = C_1\left(SCB/PDI^n\right)^{C_2} + C_3\left(SCB/PDI^n\right)^{C_4}$$

to obtain a change in density; wherein the coefficients n and $C_{1\text{-}4}$ are determined from curve fitting data obtained as measured properties; and

c) calculate the virtual density using an equation:

$$1/\rho = \sum(w_i / \rho_i) = \int \frac{1}{\rho}\left(\frac{dw}{d \log M}\right) d \log M$$

wherein $\rho$ = [the results in step a)] minus [the results in step b)]; and

wherein the MW, MWD, SCB, and PDI comprise data obtained as measured properties, data provided as a digitally determined value, data obtained by curve fitting the data obtained as measured properties, data provided as an arbitrarily assigned value or a combination thereof.

Virtual polymer properties can be determined for properties that are related to polymer density and microstructure. Such a method can be used to design resins that will impart specific properties to end-use products. A method to determine a polymer virtual property value comprises: selecting a property related to a polymer density and constructing a calibration curve based upon measured density data and measured polymer property data; and use the calibration curve to calculate the property value at each point of Molecular Weight across a Molecular Weight Distribution profile of the polymer to obtain a plurality of calculated property values; and sum the calculated property values to obtain the polymer virtual property value; wherein the MW and the MWD comprise data obtained as measured properties, data provided as a digitally determined value, data obtained by curve fitting data obtained as measured properties, data provided as an arbitrarily assigned value or a combination thereof. The property values related to density can include, but are not limited to, crystallinity, melting point, natural draw ratio, Young's modulus, yield strength or a combination thereof.

The polymer architecture data for MW, MWD, and SCB can be obtained from SEC, GPC, SEC/FTIR, NMR or any other analysis method or system capable of providing the data. In one aspect, Schultz-Flory Distributed MWD profiles are used to provide MWD data.

The various aspects of the present invention are appropriate for semi crystalline polymers and especially olefin polymers. Polyethylene is an olefin polymer that was used as an example to demonstrate the present invention and provided consistent results for polymers having a density in a range from about 0.906g/$cm^3$ to about 1.01 g/$cm^3$. The polymer can be a homopolymer or copolymer with mono-modal or bimodal architecture or a blend of homopolymers, copolymers or a combination thereof. Polyethylene serves as an example for purposes of describing the invention. The monomers that may be copolymerized with ethylene typically may have from three to about 20 carbon atoms in their molecular chain. Non-limiting examples of these monomers include 1-butene, 1-pentene, 1-hexene, 1-octene, 1-decene, or styrene.

In another aspect of the invention, any of the method steps can be performed by a software application. Further, the software application can be associated with a system capable of accepting data and calculating a result. Such system can be contained within one unit, can comprise several modules linked together, or the methods can be performed in separate modules and then combined for a result. For example, the method can be performed in association with a polymerization reactor in real time or in stages. Or the various methods can be performed on separate instrumentation devices and then the results combined for a final analysis. In another aspect the methods can be performed in one system designed to measure or accept data and perform analysis, then calculate results.

DESCRIPTION OF THE DRAWINGS

The patent or application file contains at least one drawing executed in color. Copies of this patent or patent application publication with color drawing(s) will be provided by the Office upon request and payment of the necessary fee.

The invention, together with further advantages thereof, can best be understood by reference to the following description taken in conjunction with the accompanying drawings in which:

**Figure 1** represents Density vs. Log $M_w$ plot.

**Figure 2** illustrates a calibration curve used to estimate equilibrium densities.

**Figure 3** represents MWD for physical blends of two metallocene narrow MWD samples (DMTE B).

**Figure 4** represents homopolymer density calculated as a function of the molecular weight distribution compared to the measured density

**Figure 5** represents MWD comparisons for synthetic Log normal distributions ($M_w$ = 150 kg/mol).

**Figure 6** shows examples of narrow molecular weight distributions.

**Figure 7** shows examples of medium molecular weight distributions.

**Figure 8** shows examples of broad molecular weight distributions.

**Figure 9** represents Quadratic polynomial fit of homopolymer density as a function of linear and squared terms in both $M_w$ and PDI.

**Figure 10** shows Calculated Goodness of Fit for Quadratics Polynomial and ANOVA data.

**Figure 11** shows reverse SCB profile for sample MTE-16.

**Figure 12** represents reverse SCB profiles for bimodal samples BM ZN-1 (blue data) and DMTE-2 (red data). Data circles are SCB levels across the MWDs. Sample DMTE-1 is not shown, but has a similar SCBD as DMTE-2. However, sample DMTE-1 has less separation between SCB levels in the LMW and HMW compared to DMTE-2.

**Figure 13** shows Density change (homopolymer vs. copolymer) per SCB as the SCB level increases in Metallocene catalyzed samples.

**Figure 14** demonstrates the influence of both SCB and MWD on the observed density change for selected 2.3 PDI Metallocene (black filled circles) catalyzed samples from Table 5A and 4.9 PDI Ziegler Natta (open circles) catalyzed samples from Table 5B at comparable SCB levels.

**Figure 15** demonstrates the influence of both SCB and MWD on the observed density change for Metallocene (black filled circles), Ziegler Natta (open circles), and Chromium (triangles) catalyzed samples

**Figure 16** shows Goodness of fit plot for density values reported in Table 7. represents Plots of SCB/PDI$^n$ vs. density changes calculated for samples given in Tables 5A to 5D, where data points were shifted to the left by using a value of 0.32 for the PDI exponent.

**Figure 17** represents the calculated density differences from Eq. 4 as reported in Table 6A to 6D. Data points are given as symbols and the fitted data using Eq 4 is given as the solid line. The value for the PDI exponent n equaled 0.318975556. The goodness of fit plot of the measured density change and that calculated using this algorithm shows an $R^2$ value of 0.9918 and demonstrates that the algorithm can be used to reasonably estimate this value.

**Figure 18** shows Goodness of fit plot for density values reported in Table 7.

**Figure 19** shows a broad Gaussian MWD (PDI = 14) where the slope is systematically changed to give a reversed SCBD.

**Figure 20** shows fitted MWD from SEC-FTIR data for a ZN bimodal polymer. Seven SFDs were used to fit the experimental data.

**Figure 21** shows fitted SEC-FTIR data for a ZN bimodal polymer. The measured density for this sample is 0.948 g/cm$^3$ and the calculated density is 0.950 g/cm$^3$. Weight fraction amounts of SCB (4.2 SCB/1000 TC maximum) were added to the homopolymer SFDs peak in order to match the experimental SCBD.

**Figure 22** Demonstrates fit of predicted and experimental points from equation 5

**Figure 23** Demonstrates the empirical calibration curve (solid line) relating density to melting point values compared to respective values reported in the cited references. Assigned values of 20°C and 142.5°C were given for density values of 0.852 g/cm$^3$ and 1.01 g/cm$^3$, respectively (see Detailed Description).

**Figure 24** Demonstrates crystallinity values obtained from both WAX (open black circles) and density measurements (open blue circles) for polyethylene samples as reported by Stadler *(e-polymers* **2009,** no 040) are compared to calculated values obtained as described in text. Also shown are crystallinity data reported by Mirabella (Journal of Polymer Science, Part B: Polymer Physics 2002, 40,1637) obtained from both DSC (open triangles) and XRD measurements (solid triangles) and compared to calculated values. Lastly, data reported by Bartczak (Polymer 2005, 46, 8210) obtained from DSC (solid diamonds) and density measurements (open squares) are also shown and compared to calculated values to within $\pm$ 0.05. The dotted lines in this plot denote the $\pm$ 0.05 deviation away from the ideal 1 to 1 correlation given as the solid (red) line.

**Figure 25** demonstrates the direct relationship between density and weight fraction crystallinity.

**Figure 26** demonstrates the process for and typical data obtained from PSP2 calculations.

**Figure 27** demonstrates calculated *PSP2* values to estimate a sample's Natural Draw Ratio (NDR) using PSP values and the correlation plot.

**Figure 28** Illustrates the 5 equations.

DEFINITIONS

The following definitions are provided to aid the understanding of the detailed description of the present invention.

dW/d Log M means the Weight fraction.

FTIR means Fourier Transform-Infrared Spectrophotometry.

GPC means Gel Permeation Chromatography

MW means Molecular weight.

MWD means Molecular weight distribution.

$M_n$ is the Number average MW.

$M_w$ is the Weight average MW.

TREF means Temperature rising elution fractionation

SEC means size exclusion chromatography

NMR is nuclear magnetic resonance

Calculated density is used interchangeably with the virtual density, predicted density, or estimated density. The calculated density is determined by calculation or methods other than by actual measurement of the property. The calculated density is a virtual density that is predicted from the relationship of density to the microstructure of a polymer.

Algorithms is used interchangeably with the term "equations" to refer to the equations developed for various aspects of the invention.

Experimental means the actual measurement of a polymer property; also the terms "experimental measurement" or "measured property" may be used.

Digital or synthetic data - data from SEC/FTIR, GPC, NMR or a combination.

SCB - short chain branches or branching.

SCBD - short chain branching distribution or the number of SCB per 1000 carbon atoms at each MW across the MWD profile of a polymer.

Polymer and resin may be used interchangeably.

Micropolymer architecture, microstructures, or polymer architecture means the amount and distribution of primary polymer structures such as MW, MWD, SCB and SCBD.

Whole polymer refers to the composite across all MW and SCB levels of a polymer.

DETAILED DESCRIPTION

The methods of the present invention are applicable to all classes of semi-crystalline polymers that demonstrate correlation between MW and any structural entity on the polymer that will disrupt crystallization. For ease of understanding, polyolefin polymers are used as a non-limiting example to describe the various aspects of the invention, particularly polyethylene homopolymers and copolymers. While inventions are described in terms of "comprising" various steps or elements, the inventions can also "consist essentially of" or "consist of" the various steps or elements. It is understood that the present invention is not limited to the aspects and examples outlined herein, and that the present invention includes all alternatives, modifications, and equivalents as may be included within the spirit and the scope of the specification and claims that follow.

Differences in the polymer microstructure, such as the MW, MWD profile, SCB, and the SCBD of a given polymer, can influence the resulting properties of that polymer and are useful in determining polymer properties. For purposes of the invention, data for these microstructure components can be provided as data obtained from experimental measurement on actual samples. Data can also be provided as digitally assigned values that are selected arbitrarily. In addition, the curve-fitting of actual measurement data can be used, or any combination of the above. For example, data from experimental measurement can comprise data obtained from measuring the microstructures of polymers with any suitable technology including, but not limited to, Nuclear Magnetic Resonance (NMR), Gel Permeation Chromatography (GPC), Size Exclusion Chromatography (SEC), Temperature Rising Elution Fractionation (TREF), FTIR or any combination thereof. In addition, digitally assigned values may be provided comprising an arbitrary value based upon certain assumptions. For example, a certain value for MWD may be provided to estimate other properties needed in a resin that would have the same properties as those know to come from resins with that MWD profile.

The MWD profile of a polymer can be provided by any suitable method and instrumentation. A non-limiting example of an analytical technique to determine the MWD profile of a polymer is SEC or GPC. Inherently, as used in this disclosure, the MWD profile of a polymer can provide, among other data, the MWD data and associated weight fraction at each MW, including common terms useful in the art such as $M_w$ and $M_n$.

Similarly, the SCB and SCBD of a polymer can be provided by any suitable method and instrumentation. Techniques could include, but are not limited to, TREF, NMR, SEC-IR and SEC-FTIR. Inherently, as used in this disclosure, the SCBD of a polymer can provide the number of SCB per 1000 carbon atoms at each MW across the MWD profile.

One method to provide both the MWD profile and the SCBD of a polymer is SEC-FTIR using experimental analysis or measurement, for example as described in U.S. Patent No. 6,632,680 and U.S. Patent No. 7,056,744, the disclosures of which are incorporated by reference in their entirety herein. An advantage of SEC-FTIR as it relates to the methods of the present invention is the small quantity of the polymer training samples that are required for analysis to determine the MWD profile and the SCBD.

The composite density of a polymer can be determined by any suitable method and instrumentation. Analytical techniques include, but are not limited to, refractive index, pycnometer or density column per ASTM test methods and any other ASTM test methods for density. The composite resin density is the density of the polymer as a whole, across all molecular weights and SCB levels.

The density of a polymer is important because many desirable physical and mechanical properties of an end-use polymer product are related to the density of the polymer. Furthermore the density of a polymer is related to the microstructure of the polymer, such as the MW, MWD, SCB, and SCBD. If the density of a polymer is controlled during polymerization, various desirable properties can be obtained in the end-use product made from the polymer.

For example, the density of a polyethylene polymer typically can be controlled by varying the amount of short chain branching (SCB) in the polymer by copolymerizing ethylene with an alpha olefin such as 1-butene, 1-hexene, or 1-octene. The resulting copolymers have bulky side-chains or short chain branches (SCB) that do not readily fit into the crystalline structure of the polymer and form an amorphous region around and between crystallites. The branching controls crystallization because the size (thickness) of a crystalline layer is greatly influenced by the distance between these short chain branches. As branching increases the crystallinity decreases and influences the density because the less crystalline the polymer, then the less dense the polymer is.

Because polyethylene has both crystalline and amorphous regions it is semi-crystalline and is often modeled as a two-phase material that is characterized by some weight fraction of crystalline material having a density of about 1.010 g/cm$^3$ and the remaining weight fraction of amorphous material having a density about 0.852 g/cm$^3$ at room temperature.

The average density of polyethylene polymers is affected by MW in addition to the amount of short chain branching (SCB) and to a lesser extent (i.e., changes in the forth significant figure) the SCB distribution in the polymer. However, even though homopolymers do not have the SCB formed by the introduction of a comonomer during polymerization, they are also semi-crystalline because they have both crystalline and amorphous regions. One reason for this is that the chains of polymer molecules are entangled with each other and at "crossing" points of the chains the entangled molecules do not fit into the crystalline structure, thus contributing to the amorphous content of the polymer. The long chains of homopolymers would be expected to have a great many such entanglements, and the amorphous material contributed by long chains might be expected.

In addition to MW, the density of a homopolymer is also a function of the shape of the MWD of the polymer, and the whole MWD profile on a MW slice by slice basis is needed to estimate these effects. Simply taking MW averages or their ratios (such as PDI values) will at best only grossly account for MWD effects on homopolymer density. In addition to the effect of MW and MWD seen in a homopolymer, the density of a copolymer is affected by the presence of SCB.

Various aspects of the invention comprise methods, algorithms or equations, instrumentation, systems and software that estimate or calculate the effects of MW, MWD, SBC and SCBD on the average density of polyethylene resins. The amounts and distributions of these primary polymer structures can be acquired experimentally from size exclusion chromatography (SEC) coupled with on-line Fourier transform infrared spectroscopy (FTIR). Using SEC-FTIR data and developed algorithms, the average polymer density values for a variety of polyethylene resins with different micropolymer architectures were calculated and compared to the measured density obtained using ASTM methods.

In one aspect of the invention an equation was developed to quantify the effect of MW on density. Using a set of homopolymers with known crystallinity and crystallizing behavior, the density was determined as a function of the log molecular weight (log M). The density was plotted versus log M and demonstrated a linear relationship down to log M = 2.856 which represent a molecular weight of approximately 720 g/mol. All MW lower than approximately 720 g/mol were assigned a density equal to 1.01 g/cm$^3$. Polyethylene density dependence (slow cooled) on molecular weight effects was demonstrated and adequately captured using the developed equation. Using a number of homopolymer resins with various architectures we found that we could determine the density to within $\pm$ 0.002 g/cm$^3$ for the whole polymer using the weight fraction ($dW$/dLog $M$) vs. Log $M$ values obtained from SEC profiles.

In another aspect of the invention the effect of MWD was determined and an equation developed. In addition to molecular weight, the density of a homopolymer is also a function of the shape of the MWD of the polymer, and the whole MWD profile on a MW slice by slice basis is needed to estimate these effects. Simply taking molecular weight averages or their ratios (such as PDI values) will at best only grossly account for MWD effects on homopolymer density. We compared the density change with MW using a GPC bell shaped curve. For each area under the curve that equals 1, all the pieces summed together must equal 1. Therefore if the MW is determined for each slice that is measured, then the MW determines the density for each slice. When all the fractions are summed the density of the whole polymer is calculated. An equation was developed to provide this function.

In another aspect, a calibration curve was invented to give the best fit of the coefficients a and b of the equation a + b(LogM) over the entire MWD for a set of calibration samples using the Solver function in Excel®. For example, the SEC MWD data of a particular sample was placed into two columns, one containing all the Log M values and the other, the respective dw/dlog m values associated with a particular Log M value. In a third column, the values for the product of (a + b(LogM)) times dw/dlog m values for each Log M value were placed. The summation of values from this latter column gives the calculated specific volume for the polymer (i.e. 1/p), the inverse of which is the polymer's predicted density. A single set of a and b values were determined and used in this third column so that the squared difference between the predicted or calculated density and the known density of this particular sample was minimized using the Excel®) Solver program. If more than one sample is being considered, this process can be done simultaneously. For example, if two samples were used, a single set of a and b values would be determined by minimizing the squared difference between the predicted densities and the known densities of both samples using the Excel®) Solver program. Furthermore, if 10 or more samples were used, a single set of a and b values would be determined by minimizing the squared difference between the predicted densities and the known densities of all 10 or more samples using the Excel® Solver program. As disclosed herein, the values for a and b were varied until the squared density residuals for all 10 or more samples are collectively minimized.

In another aspect, methods, and equations were invented to determine the effect of SCB on density suppression beyond that which occurs with MW. If the density of a copolymer is calculated using the inventive techniques of the present invention, the copolymer structure must be considered because copolymers have SCB and polymers with more SCB have more crystallinity disruption and lower density. Therefore, a second equation was invented to allow for the suppression in homopolymer density with the incorporation of SCB. The data used comprised bulk SCB data (both NMR and FTIR) and SEC polydispersity values *(Mw/M*n) for a variety of 1-hexene copolymer samples with various architectures. It follows that the difference between copolymer density and homopolymer density is due to branching and this can be used to calculate the copolymer density. This density change with SCB level was quantified by running tests on all types of polyethylene resins because the amount of difference induced at a particular SCB level varies with the MWD of the polymer. Resins made with metallocenes, Zeigler Natta and chrome catalysts and bimodal resins were tested. The relationship between the MWD normalized SCB term (i.e., $SCB/PDI^n$) and density suppression beyond that which occurs with MW, was quantified by curve fitting the data with an equation so that one universal curve was used for resins of different MWD. The predicted results correlated well to the measured results (R2 = 0.9918) down to a SCB level of 0.1 SCB/1000 TC. The densities for a variety of polyethylene copolymers with densities ranging from 0.880 to 0.967 $g/cm^3$ were accurately calculated to within an average value of $\pm$ 0.002 $g/cm^3$. The SCBD slopes in resins tested did not appear to influence the calculated density change as calculated to within three significant figures.

In another aspect, the accuracy of the algorithms used for the inventive methods were tested. To demonstrate the accuracy of the calculated or virtual density, the ASTM measured density values of the resins were compared to the calculated values and a goodness of fit plot was used. However, any method to show statistic discrepancy can be used, such as standard deviation, fit, or R squared determination.

In another aspect, MWD and SCBD data acquired from SEC-FTIR were also used to estimate the whole polymer density through the use of peak fitting techniques and the inventive equations. Virtual density results can be obtained using this approach even for complex MWD and SCBD profiles such as bimodal and multimodal systems.

In additional aspects, arbitrary values were assigned for MW, MWD and SCB to calculate the virtual density necessary to produce resins with selected or desired properties that are density dependent. Given the ability to predict the density of any combination of MWD and SCBD, various structures can now be digitally evaluated for their potential application in a particular product line. Moreover, by selecting peaks with PDIs similar to those found in a particular type of resin, for example metallocene catalyzed resins, the possibility exists to make actual resins through physical blending that correspond to digitally constructed resins comprising particular MW and SCB distributions. These aspects can comprise the use of data that is digitally fit using measured data, or that is digitally generated by assigning arbitrary values.

The aspects of this invention also comprise the algorithms or equations developed, the software containing those algorithms, and the instruments containing such software or configured to perform the calculations embodied in the algorithms. The equations are illustrated in Figure 28.

## EXAMPLES

In the following examples density measurements were made using ASTM D1505. All density plaques were made according to ASTM D4703 (Annex A1, Procedure C) and allowed to sit at room temperature for 40 hours before testing.

Molecular weights and molecular weight distributions were obtained using a PL220 SEC high temperature chromatography unit (Polymer Laboratories) with trichlorobenzene (TCB) as the solvent, with a flow rate of 1 mL/minute at a temperature of 145°C. BHT (2,6-di-tert-butyl-4-methylphenol) at a concentration of 0.5 g/L was used as a stabilizer in the TCB. An injection volume of 200 μL was used with a nominal polymer concentration of 1.5 mg/mL. Dissolution of the sample in stabilized TCB was carried out by heating at 150°C for 4 hours with occasional, gentle agitation. The columns used were three Styragel® HMW 6E (Waters) columns (7.8x300mm) and were calibrated with a broad linear polyethylene standard (Chevron Phillips Marlex® BHB 5003 polyethylene resin) for which the molecular weight had been determined using a Dawn EOS multi-angle light scattering detector (Wyatt).

SCB data was obtained using a SEC/FTIR high temperature heated flow cell (Polymer Laboratories) as disclosed in DesLauriers et al. in Polymer, 43 (2002), 159.

**EXAMPLE 1 - Molecular Weight Contributions to Density**

Microstructure architecture that affects the density of polyethylene polymers include MW as well as both the amount and distribution of short chain branching (SCB) in the polymer. These primary microstructures influence the level of crystallinity in the polymer. To better quantify the effect of MW on density, the MWD profiles (as determined by SEC) for a set of relatively narrow MWD metallocene homopolymers having a PDI of about 3.0, whose crystallinity and crystallizing behavior were originally reported by Jordens et. al in Polymer, 41(2000) 7175, were re-evaluated and used as a Calibration Set. The results are shown in Table 1.

The densities of these polymers were plotted as a function of the weight-averaged molecular weight as illustrated in Figure 1. The y-axis represents the density in g/cm$^3$ and the x-axis is the Log M where M is equal to the $M_w$ value obtained for the Calibration Set homopolymer samples listed in Table 1. This data demonstrated a linear relationship between homopolymer density and Log $M_w$. However, to better assess this correlation between MW and density in light of the fact that each calibration sample has a PDI > 1, the volume fractions ($1/\rho_i$) weighted by the weight fractions ($w_i$) were determined at each MW component across the MWD as shown in Equation 1.

$$1/\rho = \Sigma(w_i / \rho_i). \qquad \text{(Eq. 1)}$$

Furthermore, by using the appropriate calibration curve, the homopolymer density of the whole polymer was calculated by summing (slice by slice) the specific volume fractions weighted by the weight fractions of the various MW components that make up the MWD profile as given in Equation 2.

$$1/\rho = \sum(w_i / \rho_i) = \int \frac{1}{\rho}\left(\frac{dw}{dLogM}\right) dLogM \qquad \text{(Eq. 2)}$$

*where :* $\rho$=[$a$-$bLogM$]

The coefficients *a* and *b* in this equation were determined by a least square fit to the SEC data for each of those samples reported in Table 1. This process consisted of finding a single set of a and b values determined by collectively minimizing the squared difference between the predicted densities and the known densities of all 11 samples as given in Table 1, using the Excel® Solver program. Also shown in this Table are the final values for Absolute Density Residual where the Absolute Density Residual is the square root of the difference squared between the Calculated Density and the Measured Density.

In this work, the following equation was used to estimate homopolymer density from molecular weight:

$$\rho = 1.0748 - (0.0241)\ Log\ M. \text{(which was derived using Eq 3)}$$

$$\rho = [\text{a-b Log}M] \qquad \text{(Eq.3)}$$

However, considering only the linear relationship between molecular weight and density will overestimate the density at very low molecular weights and the selection of what density represents the maximum density (i.e., the density of 100% crystalline polyethylene) will dictate how much of the MWD should be used in the calculation. For example, densities greater than 1.01 g/cm$^3$, a value which is often cited as the density of 100% crystalline polyethylene, are predicted for molecular weight values less than 300 g/mol. If the density of 100% crystalline polyethylene is taken to be 1.00 g/cm$^3$, a value also commonly cited, then all molecular weight values less than 800 g/mol must either be excluded from the calculation or assigned the maximum density value. For the calculations used herein, all molecular weights less than 715 g/mol were assigned density values of 1.006 g/cm$^3$.

It is also plausible that the linear correlation may result in underestimating the true density at very high molecular weights. However, a simulation of a MWD for an UHMW-PE homopolymer sample (i.e., Gaussian shaped MWD, 2,000 kg/mol $M_w$ and a 4 PDI) was conducted and yielded a calculated density of 0.932 g/cm$^3$, which was in line with expected values (i.e., between 0.93 and 0.94 g/cm$^3$). Therefore we expect the linear range of the calibration curve (Eq. 3) to extend from 0.7 to 1x10$^4$ kg/mol. This range corresponds to density values of 1.01 to 0.906 g/cm$^3$, respectively.

Table 1. Selected Properties for Calibration Set

| Sample | Nominal $M_w$ (kg/mol) | Nominal PDI | Measured density (g/cm$^3$) | Calculated density (g/cm$^3$) | Absolute Density Residual(ABS) |
|---|---|---|---|---|---|
| MTE H1 | 750 | 3.5 | 0.938 | 0.940 | 0.002 |
| MTE H2 | 368 | 2.6 | 0.944 | 0.945 | 0.001 |
| MTE H3 | 283 | 3.4 | 0.947 | 0.950 | 0.003 |
| MTE H4 | 201 | 2.5 | 0.951 | 0.952 | 0.001 |
| MTE H5 | 193 | 3.5 | 0.950 | 0.954 | 0.004 |
| MTE H6 | $13_5$ | 3.1 | 0.955 | 0.957 | 0.002 |
| MTE H7 | 70 | 2.8 | 0.964 | 0.963 | 0.001 |
| MTE H8 | 51 | 2.3 | 0.969 | 0.966 | 0.003 |
| MTE H9 | 35 | 3.6 | 0.973 | 0.972 | 0.001 |
| MTE H10 | 25 | 2.5 | 0.975 | 0.974 | 0.001 |
| MTE H11 | 20 | 3.2 | 0.976 | 0.977 | 0.001 |
| | | | | **Average ABS** | **0.002** |

Figure 2 illustrates the calibration curve used to estimate equilibrium densities of polyethylene samples of the Calibration Set (solid line). After demonstrating the applicability of the invention to high molecular weight and low molecular weight polymers, we concluded that in most homopolymer polyethylene samples, the majority of the sample falls within the linear range of our correlation. Using Equation 2 we calculated the virtual densities of polyethylene homopolymers to within on average $\pm$ 0.002g/cm$^3$.

**EXAMPLE 2 Validation of Equations for Homopolymers**

To further demonstrate the applicability of the inventive equations, the virtual densities for a number of polyethylene homopolymer samples (Validation Resins) (both developmental and commercial) having various MWD breadths and microstructure were calculated and compared to their measured density values. These included resins polymerized by Ziegler Natta catalysts and chromium catalysts because each type of catalyzed resin will have different MWD and microstructure than the Calibration Set of Table 1 which were polymerized using metallocene catalysts. In addition, dual blends of metallocene resins were evaluated to determine the effect of bimodal distribution as well as a bimodal metallocene catalyzed sample. The results are shown in Tables 2A to 2C where the Absolute Residual is the square root of the difference squared between the Calculated or Virtual Density and the Measured Density. It should be noted that none of these subsequent samples were used in the construction of the calibration curve. Table 2A contains data for Ziegler Natta catalyzed resins; Table 2B contains chromium catalyst resins; Table 2C is for resin blends made with metallocene catalysts.

Table 2A. Homopolymer Validation Resins (Ziegler Natta catalyzed samples)

| Sample | Nominal $M_w$ (kg/mol) | Nominal PDI | Measured density (g/cm$^3$) | Calculated density (g/cm$^3$) | Absolute Density Residual(ABS) |
|---|---|---|---|---|---|
| ZN-H1 | 44 | 5.7 | 0.970 | 0.971 | 0.001 |
| ZN-H2 | 147 | 6.4 | 0.964 | 0.959 | 0.005 |
| ZN-H3 | 132 | 5.9 | 0.964 | 0.959 | 0.005 |
| ZN-H4 | 81 | 3.8 | 0.962 | 0.962 | 0.000 |

(continued)

| Sample | Nominal $M_w$ (kg/mol) | Nominal PDI | Measured density (g/cm$^3$) | Calculated density (g/cm$^3$) | Absolute Density Residual(ABS) |
|---|---|---|---|---|---|
| ZN-H5 | 72 | 4.3 | 0.962 | 0.964 | 0.002 |
| ZN-H6 | 144 | 6.3 | 0.961 | 0.959 | 0.002 |
| ZN-H7 | 136 | 5.1 | 0.961 | 0.959 | 0.002 |
| | | | | **Average ABS** | **0.002** |

Table 2B. Homopolymer Validation Resins (chromium catalyzed samples)

| Sample | Nominal $M_w$ (kg/mol) | Nominal PDI | Measured density (g/cm$^3$) | Calculated density (g/cm$^3$) | Absolute Density Residual(ABS) |
|---|---|---|---|---|---|
| Cr-H1 | 125 | 6.1 | 0.964 | 0.961 | 0.003 |
| Cr-H2 | 145 | 8.7 | 0.962 | 0.962 | 0.000 |
| Cr-H3 | 174 | 6.5 | 0.961 | 0.959 | 0.002 |
| | | | | **Average ABS** | **0.002** |

Table 2C. Homopolymer Validation Resins (dual blends of metallocene resins)

| Sample | Blend Comp. Wt% MW | Nominal $M_w$ (kg/mol) | Nominal PDI | Measured density (g/cm$^3$) | Calculated density (g/cm$^3$) | Absolute Density Residual (ABS) |
|---|---|---|---|---|---|---|
| DMTE-H1 | 60 26K & 40 220K | 103 | 7.1 | 0.965 | 0.963 | 0.002 |
| DMTE-H2 | 60 26K& 40 250K | 107 | 7.2 | 0.965 | 0.963 | 0.003 |
| DMTE-H3 | 60 20K& 40 300K | 116 | 9.7 | 0.967 | 0.964 | 0.003 |
| DMTE-H4 | 60 26K& 40 300K | 119 | 8.0 | 0.966 | 0.963 | 0.003 |
| DMTE-H5 | 50 20K & 50 250K | 125 | 10.4 | 0.965 | 0.962 | 0.003 |
| DMTE-H6 | 40 26K & 60 220K | 132 | 6.8 | 0.962 | 0.959 | 0.003 |
| DMTE-H7 | 50 20K & 50 300K | 141 | 9.8 | 0.964 | 0.961 | 0.003 |
| DMTE-H8 | 30 20K & 70 300K | 143 | 7.1 | 0.961 | 0.958 | 0.003 |
| DMTE-H9 | 40 20K & 60 250K | 147 | 8.4 | 0.961 | 0.959 | 0.002 |
| DMTE-H10 | 40 26K& 60 250K | 148 | 7.5 | 0.960 | 0.958 | 0.002 |
| | | | | | **Average ABS** | **0.003** |

The average absolute residual between the calculated and measured values for the Validation Sample sets as a whole was consistent with that found for the Calibration Set (i.e., 0.002 g/cm$^3$). This Validation Sample set demonstrated the applicability of the invention for polymers having many types of diverse architecture. For example, not only has the breadth of the MWD increased in this Validation Sample set compared to the narrower MWD of the metallocene (MET) samples of the Calibration Set, but the polymer architecture in the dual metallocene blended samples of the Validation Samples varied considerably as shown in Figure 3. These results as a whole suggest that the algorithm as proposed in Equations 2 and 3 can adequately calculate virtual density for any homopolymer structure. Figure 4 demonstrates the goodness of fit for samples in Tables 1 and 2.

**EXAMPLE 3 Application of the Equations**

The equations were used to predict how the breadth of the molecular weight distribution affects the homopolymer density of a polymer. As shown in Figure 5, several synthetic or digitally generated log-normal molecular weight distributions were plotted by selecting the same weight-averaged molecular weights but different breadths or PDI's $(M_w/M_n)$. There were several things to notice about these distributions besides their obvious differences in breadth. First, the peak of the distributions shifted to lower molecular weights as the breadths increased. Second, and somewhat related to the first comment, the amount of low molecular weight material that was added greatly exceeded the amount of high molecular weight material that was added as the distributions were broadened. This was necessary to keep the weight-averaged molecular weights constant while broadening the distributions. The virtual homopolymer densities calculated in this Example are summarized in Table 3.

Table 3. Calculated Homopolymer Density as a Function of PDI for $M_w$ = 150,000 g/mol

| Nominal PDI | Calculated Homopolymer Density ($g/cm^3$) | Peak Molecular Weight (kg/mol) | Density at Peak of MWD ($g/cm^3$) |
|---|---|---|---|
| 2 | 0.9508 | 106.07 | 0.9512 |
| 3 | 0.9526 | 86.60 | 0.9532 |
| 5 | 0.9550 | 67.08 | 0.9558 |
| 8 | 0.9571 | 53.03 | 0.9581 |
| 12 | 0.9590 | 43.30 | 0.9602 |
| 16 | 0.9603 | 37.50 | 0.9616 |
| 20 | 0.9614 | 33.54 | 0.9627 |

Figures 6 - 8 show sets of synthetic molecular weight distributions obtained from SEC for a molecular weight series of polydispersed resins. They appear as narrow (PDI =2.0) in Figure 6, medium (PDI =5) in Figure 7, and broad (PDI =20) in Figure 8. The density differences between the highest and lowest molecular weights with the same PDI's were the same for the narrow, medium, and broad PDI polymers, 0.0299 $g/cm^3$ as shown in Table 4. Table 4 shows the expected changes in density as a result of a systematic change in $M_w$ and PDI. It was also observed that for a given molecular weight, the difference in calculated homopolymer density between the narrowest (PDI = 2) and the broadest (PDI = 20) is 0.0106 g/cm3. Both of these are due to the fact that these synthetic distributions are log-normal distributions and that density is assumed to be linear in Log *M*.

Table 4. Expected Homopolymer Densities for Various $M_w$ Values

| $M_w$ (kg/mol) | PDI | Density (g/cm3) |
|---|---|---|
| 500 | 2 | 0.9388 |
| 500 | 5 | 0.9429 |
| 500 | 20 | 0.9494 |
| | | |
| 350 | 2 | 0.9423 |
| 350 | 5 | 0.9465 |
| 350 | 20 | 0.9529 |
| | | |
| 150 | 2 | 0.9508 |
| 150 | 5 | 0.9550 |
| 150 | 20 | 0.9614 |
| | | |
| 50 | 2 | 0.9617 |

(continued)

| Table 4. Expected Homopolymer Densities for Various $M_w$ Values | | |
|---|---|---|
| $M_w$ (kg/mol) | PDI | Density (g/cm3) |
| 50 | 5 | 0.9659 |
| 50 | 20 | 0.9723 |
| | | |
| 25 | 2 | 0.9686 |
| 25 | 5 | 0.9728 |
| 25 | 20 | 0.9793 |

The data of Table 4 were further analyzed using statistical software to "model the model" and to project the data in three dimensions to illustrate how the expected homopolymer density is a non-linear function of both variables. To obtain the plot in Figure 9 the values were fitted with a quadratic polynomial with density as a function of linear and squared terms in both $M_w$ and PDI and a nominal density error of 0.0016 g/cm$^3$ was assigned. Moreover, further statistical analysis of the density data generated by this invention from digital MWD curves allows one to separately assess the influential effects that individual structural variable such as MW and MWD have on the expected density values. For example, in Figure 10, the statistical F and p values are given in the ANOVA table. These terms are statistical indicators of how much a variable affects a particular response. That is, the higher the F values the greater the variable's influence on the selected response variable, in this case density. Conversely the lower the p value generated, the more influential the variable. The data give in Figure 10 suggests that although both the MW and MWD variables are main effects in changing density, the MW may be more effective at changing the density of the sample than is the sample's MWD, moreover the MW termed squared, has nearly the same effect as does the MWD. This data demonstrates other possible uses for the analysis of the digital shapes by this invention in conjunction with the use of statistical software.

**EXAMPLE 4 - SCB Contributions to Density**

After accounting for MW effects we accounted for the further reduction in density by the presence of SCB. A number of 1-hexene copolymers made from different catalyst systems (and therefore various architectures) were characterized using SEC and the obtained structural data are given in Tables 5A to 5D below. Table 5A comprises metallocene resins. Table 5B includes Zeigler Natta resins, Table 5C reports chromium resins and Table 5D lists resins that are structurally different from those in Tables 5A to 5C. The samples listed in 5D included both mono-modal and bimodal samples. The first of these samples (MTE-16) is a single metallocene catalyzed resin with a slightly broader MWD (PDI = 3.1) and a reversed SCBD. That is, the SCB level in this sample increases with molecular weight as shown in Figure 11. Similarly, reverse SCBDs are obtained from the bimodal samples BM ZN-1, DMTE-1 & 2 in which low molecular weight homopolymers are combined with higher molecular weight copolymers (Figure 12).

Table 5A. Calculated Density Values for Metallocene Catalyzed Copolymer Samples

| Sample | Mw (kg/mol) | PDI | SCB/1000 TC | Calculated Homopolymer ρ(g/cm$^3$) | Measured Copolymer ρ (g/cm$^3$) | Δρ | Δρ/SCB |
|---|---|---|---|---|---|---|---|
| MTE-1 | 182 | 2.42 | 0.1 | 0.951 | 0.947 | 0.005 | 0.049 |
| MTE-2 | 139 | 2.5 | 1.2 | 0.956 | 0.942 | 0.014 | 0.012 |
| MTE-3 | 159 | 2.34 | 2.3 | 0.953 | 0.937 | 0.016 | 0.007 |
| MTE-4 | 142 | 3.13 | 3.5 | 0.955 | 0.933 | 0.022 | 0.006 |
| MTE-5 | 129 | 2.3 | 3.7 | 0.956 | 0.933 | 0.023 | 0.006 |
| MTE-6 | 134 | 2.72 | 3.7 | 0.955 | 0.936 | 0.019 | 0.005 |
| MTE-7 | 111 | 2.75 | 6.8 | 0.957 | 0.931 | 0.027 | 0.004 |
| MTE-8 | 204 | 2.25 | 9.3 | 0.950 | 0.917 | 0.033 | 0.004 |
| MTE-9 | 187 | 2.11 | 10.7 | 0.951 | 0.916 | 0.035 | 0.003 |
| MTE-10 | 120 | 2.2 | 12.4 | 0.956 | 0.916 | 0.040 | 0.003 |

(continued)

| Sample | Mw (kg/mol) | PDI | SCB/1000 TC | Calculated Homopolymer ρ(g/cm$^3$) | Measured Copolymer ρ (g/cm$^3$) | Δρ | Δρ/SCB |
|---|---|---|---|---|---|---|---|
| MTE-11 | 180 | 2.33 | 12.9 | 0.951 | 0.913 | 0.038 | 0.003 |
| MTE-12 | 117 | 2.5 | 13.6 | 0.956 | 0.918 | 0.038 | 0.003 |
| MTE-13 | 95 | 3.5 | 32 | 0.960 | 0.902 | 0.058 | 0.002 |
| MTE-14 | 102 | 3.52 | 36.3 | 0.959 | 0.897 | 0.062 | 0.002 |
| MTE-15 | 147 | 2.63 | 49.5 | 0.954 | 0.880 | 0.074 | 0.001 |

Table 5B. Calculated Density Values for Zeigler Natta Catalyzed Copolymer Samples

| Sample | Mw (kg/mol) | PDI | SCB/1000 TC | Calculated Homopolymer ρ (g/cm$^3$) | Measured Copolymer ρ (g/cm$^3$) | Δρ | Δρ/SCB |
|---|---|---|---|---|---|---|---|
| ZN-1 | 133 | 5.02 | 1.5 | 0.958 | 0.947 | 0.012 | 0.008 |
| ZN-2 | 123 | 4.2 | 2.0 | 0.959 | 0.944 | 0.015 | 0.007 |
| ZN-3 | 120 | 3.9 | 2.0 | 0.959 | 0.944 | 0.015 | 0.007 |
| ZN-4 | 120 | 4.8 | 3.0 | 0.960 | 0.944 | 0.016 | 0.005 |
| ZN-5 | 112 | 5.3 | 3.3 | 0.961 | 0.944 | 0.017 | 0.005 |
| ZN-6 | 439 | 4.4 | 3.6 | 0.946 | 0.929 | 0.017 | 0.005 |
| ZN-7 | 91 | 4.3 | 6.5 | 0.962 | 0.937 | 0.025 | 0.004 |
| ZN-8 | 138 | 4.7 | 7.1 | 0.958 | 0.936 | 0.022 | 0.003 |
| ZN-9 | 144 | 4.9 | 7.3 | 0.957 | 0.935 | 0.023 | 0.003 |
| ZN-10 | 130 | 4.7 | 12.6 | 0.958 | 0.926 | 0.032 | 0.003 |
| ZN-11 | 135 | 4.6 | 12.6 | 0.958 | 0.927 | 0.031 | 0.002 |
| ZN-12 | 131 | 4.9 | 13.9 | 0.958 | 0.924 | 0.035 | 0.002 |
| ZN-13 | 115 | 4.8 | 22.4 | 0.959 | 0.915 | 0.045 | 0.002 |

Table 5C. Calculated Density Values for Chromium Catalyzed Copolymer Samples

| Sample | Mw (kg/mol) | PDI | SCB/1000 TC | Calculated Homopolymer ρ (g/cm$^3$) | Measured Copolymer ρ (g/cm$^3$) | Δρ | Δρ/SCB |
|---|---|---|---|---|---|---|---|
| Cr-1 | 140 | 10.4 | 14.0 | 0.961 | 0.925 | 0.036 | 0.003 |
| Cr-2 | 216 | 16.6 | 5.59 | 0.960 | 0.937 | 0.023 | 0.004 |
| Cr-3 | 228 | 19.0 | 3.4 | 0.959 | 0.944 | 0.015 | 0.004 |
| Cr-4 | 328 | 36.5 | 2.6 | 0.960 | 0.950 | 0.010 | 0.004 |
| Cr-5 | 341 | 53.7 | 2.1 | 0.961 | 0.950 | 0.010 | 0.005 |
| Cr-6 | 483 | 66.1 | 1.6 | 0.958 | 0.950 | 0.008 | 0.005 |
| Cr-7 | 500 | 73.1 | 0.9 | 0.958 | 0.951 | 0.007 | 0.008 |
| Cr-8 | 353 | 79.1 | 2.0 | 0.962 | 0.952 | 0.010 | 0.005 |

Table 5D. Calculated Density Values for Copolymer Samples with Reverse SCBD

| Sample | Mw (kg/mol) | PDI | SCB/1000 TC | Calculated Homopolymer ρ (g/cm$^3$) | Measured Copolymer ρ (g/cm$^3$) | Δρ | Δρ/SCB |
|---|---|---|---|---|---|---|---|
| MET-16 | 135 | 3.1 | 19.5 | 0.956 | 0.912 | 0.044 | 0.002 |
| BM ZN-1 | 210 | 14.0 | 1.6 | 0.958 | 0.948 | 0.010 | 0.006 |
| DMTE-1 | 231 | 14.5 | 1.5 | 0.959 | 0.950 | 0.009 | 0.006 |
| DMTE-2 | 248 | 25.3 | 1.7 | 0.960 | 0.951 | 0.008 | 0.005 |

The SCBD of these samples were also characterized by SEC-FTIR. For the first three samples in Table 5A, a zero slope (i.e., flat SCB profile) for the SCBD was measured. The Zeigler Natta samples given in Table 5B all showed the common SCBD (more SCB in the low MW end of the MWD). The slopes for these samples ranged from -0.5 to -6.5. The SCBD slopes for the chromium catalyzed samples in Table 5C ranged from 0 to -9 and exhibited similar SCBDs to those in Table 5B. Lastly, the mono-modal and bimodal samples in Table 5D all have the so called reversed SCBDs (more SCB in the high MW end of the MWD).

As shown in Figure 13, the density change per SCB was plotted against the SCB per 1000 total carbons (TC) for those resins given in Table 5A. Results demonstrated in Figure 11 showed a nonlinear relationship for how the calculated density difference between a copolymer and its homopolymer analog for metallocene catalyzed samples (whole polymers) varied when expressed in terms of density change per SCB . That is, as the average SCB content increased above about 10 SCB/1000 TC, the resulting density change decrease per SCB appeared to be less than what occurred at lower SCB levels. These values were calculated by dividing the density difference by the total SCB content of the polymer. Since we stipulated that the measured density was at equilibrium conditions, it was assumed that any variation away from the homopolymer density (due to MW effect) was attributed solely to the presence of SCB. The exhibited nonlinear relationship met expectations that the influence of SCB on density when increased from 40 to 41 SCB/1000 TC (total carbons) is less than that seen when increased from 1 to 2 SCB/1000 TC.

Another way to plot these data was shown in Figure 14 where the observed overall density change was plotted vs. the average SCB content. This figure demonstrated that the observed overall density change with SCB content for samples with PDI of about 2.3 can be described using a power law relationship. The generated algorithm given in Figure 14, coupled with the homopolymer algorithm (i.e., Eq 3) as described above can be used to predict the density of narrow MW copolymers (i.e., PDI around 2.3). A similar relationship over the same level of SCB was found for the slightly broader PDI resins (PDI around 4.9) made from Zeigler Natta (ZN) catalysts which are plotted as open circles in Figure 14. However, for these ZN resins, a clear offset in the plotted data compared to the Metallocene resin (plotted as solid circles) data was seen.

The observed offset between the ZN and Metallocene resin sets was likely associated with the PDI of samples. Typically at similar molecular weights, broader PDI samples have higher homopolymer densities, as demonstrated earlier (see Table 4) from modeling studies using normal Gaussian distributed molecular weight profiles. As such, for a broad PDI sample, more SCB is needed to achieve an equivalent density to those samples with narrower PDIs. Conversely, at the same SCB level, the resulting density change for the broad PDI sample will be less than that of the narrow PDI sample. This was shown in Figure 14.

While not being bound by theory, it seems reasonable that resins with PDI values other than 2.3 and 4.9 also have separate power law relationships for how SCB changes density in whole polymer systems. It was difficult to systematically explore the effects of SCB levels on density change at a constant PDI > 5 due to the nature of the chromium catalysts and the reactor conditions typically used to make these broad molecular weight structures. Therefore, much variation occurs in both the SCB level and the PDIs of both commercial and pilot plant resin samples. Nevertheless these broad PDI structures were examined.

For example, examination of the density changes for those chromium catalyzed resins reported in Table 5C suggested that if individual power laws exist for resins with different PDIs, then the relationship between each PDI set is likely complex and nonlinear. This latter assertion was demonstrated in Figure 13 by noting the relationship between data generated for resins with broadest PDIs (Cr-5,6,7,& 8 type samples, PDI > 54), those with PDI around 4.7 and those with PDI around 2.3. Although there were a limited number of samples in the data set for resins with very broad and similar PDIs it was obvious from these data sets as a whole that a complex expression was needed to adequately capture the influence of both SCB and MWD on the observed density change in these samples.

To normalize the SCB data for polydispersity that is demonstrated by the data from the resins polymerized by different catalysts, we recognized that a non linear relationship existed between the three data sets plotted in Figure 15. That is, the change between the fitted data for the 2.3 PDI and 4.9 PDI resin sets shown in this figure was much larger than that observed between the 4.0 PDI and > 54 PDI resin sets. This point was expressed mathematically by noting the differences between the pre-exponential factors in the respective equations (i.e., 0.0115, 0.0095 and 0.0072 for the 2.3, 4.7 and > 54 PDI data sets, respectively).

To account for the non linear nature of the data the observed SCB values were divided by an exponential value of the sample's PDI (i.e., $PDI^n$). The value for the exponent n was determined by first dividing the SCB levels in each sample by the resin's $PDI^n$ (where n is initially set to equal to 1), plotting these values verses the predicted density change, and then empirically reducing the exponent's value for the PDI until a value was determined that minimized the differences between the samples (via visual assessment).

With these data, we found that by assigning the exponent n equal to 0.32, various resin types with different polymer architectures as detailed in Tables 5A to 5D can effectively be shifted onto a single curve as shown in Figure 16. Also evident from Figure 16 is that the relationship between density difference and the normalized SCB values ($SCB/PDI^n$) could be described using a double exponential equation. This particular exercise demonstrated that with the proper selection of the exponent n, the influence of PDI on the correlation of change in density (Δρ) and SCB levels in polydispersed samples was significantly minimized if not eliminated.

Using this approach, sample data as given in Tables 5A to 5D were fitted using the following equation:

$$\Delta\rho = C_1\left(SCB/PDI^n\right)^{C_2} + C_3\left(SCB/PDI^n\right)^{C_4} \qquad \text{(Eq. 4)}$$

A subsequent fit of the data (including the exponent n) using the solver function in Excel® where the sum of the squares for the differences between the calculated Δp and the observed Δp were minimized, gave the following values for the coefficients in Equation 4 and the exponent n:

$C_1$ = 0.01239302 (g/cm$^3$)/(SCB per 1000 TC)$^{C2}$
$C_2$ = 0.49586823
$C_3$ = 0.000345888 (g/cm$^3$)/(SCB per 1000 TC)$^{C3}$
$C_4$ = -0..78067392
$n$ = 0.318975556

This equation did not account for the distribution of the short chain branching over the molecular weight distribution in the whole polymer samples (i.e., the SCBD slope) nor for SCB type. Long chain branching structures were also not considered.

The resulting predicted values for those resins in Tables 5A to 5D are given in Tables 6A to 6D and plotted in Figure 17. The calculated copolymer density values using Equations 3 and 4 are given in Table 7 while the goodness of fit plot is given in Figure 18. These results demonstrate that the inventive methods and equations can adequately determine the virtual density for this set of samples with the average absolute residual of 0.0016 g/cm$^3$. Interestingly, this error value is equal to that found for the estimations of the homopolymer densities using Equation 3.

Table 6A. Calculated Δρ Values for Table 5A Resins using Eq. 4

| Sample | PDI | SCB/1000 TC | $SCB/PDI^n$ | Measured Δρ (g/cm$^3$) | Calculated Δρ (g/cm$^3$) | Absolute Residual |
|---|---|---|---|---|---|---|
| MTE-1 | 2.42 | 0.1 | 0.1 | 0.005 | 0.006 | 0.001 |
| MTE-2 | 2.5 | 1.2 | 0.9 | 0.014 | 0.012 | 0.002 |
| MTE-3 | 2.34 | 2.3 | 1.8 | 0.016 | 0.017 | 0.001 |
| MTE-4 | 3.13 | 3.5 | 2.4 | 0.022 | 0.019 | 0.003 |
| MTE-5 | 2.3 | 3.7 | 2.8 | 0.023 | 0.021 | 0.002 |
| MTE-6 | 2.72 | 3.7 | 2.7 | 0.019 | 0.020 | 0.001 |
| MTE-7 | 2.75 | 6.8 | 4.9 | 0.027 | 0.027 | 0.001 |
| MTE-8 | 2.25 | 9.3 | 7.2 | 0.033 | 0.033 | 0.000 |
| MTE-9 | 2.11 | 10.7 | 8.4 | 0.035 | 0.036 | 0.001 |
| MTE-10 | 2.2 | 12.4 | 9.6 | 0.040 | 0.038 | 0.002 |
| MTE-11 | 2.33 | 12.9 | 9.8 | 0.038 | 0.039 | 0.001 |
| MTE-12 | 2.5 | 13.6 | 10.2 | 0.038 | 0.039 | 0.001 |
| MTE-13 | 3.5 | 32 | 21.5 | 0.058 | 0.057 | 0.001 |
| MTE-14 | 3.52 | 36.3 | 24.3 | 0.062 | 0.060 | 0.001 |

(continued)

| Sample | PDI | SCB/1000 TC | SCB/PDI$^n$ | Measured Δρ (g/cm$^3$) | Calculated Δρ (g/cm$^3$) | Absolute Residual |
|---|---|---|---|---|---|---|
| MTE-15 | 2.63 | 49.5 | 36.4 | 0.074 | 0.074 | 0.000 |

Table 6B. Calculated Δρ Values for Table 5B Resins using Eq. 4

| Sample | PDI | SCB/1000 TC | SCB/PDI$^n$ | Measured Δ ρ(g/cm$^3$) | Calculated Δρ(g/cm$^3$) | Absolute Residual |
|---|---|---|---|---|---|---|
| ZN-1 | 5.02 | 1.5 | 0.9 | 0.012 | 0.012 | 0.000 |
| ZN-2 | 4.2 | 2 | 1.3 | 0.015 | 0.014 | 0.001 |
| ZN-3 | 3.9 | 2 | 1.3 | 0.015 | 0.014 | 0.000 |
| ZN-4 | 4.8 | 3 | 1.8 | 0.016 | 0.017 | 0.001 |
| ZN-5 | 5.3 | 3.3 | 1.9 | 0.017 | 0.017 | 0.001 |
| ZN-6 | 4.4 | 3.6 | 2.2 | 0.017 | 0.019 | 0.001 |
| ZN-7 | 4.3 | 6.5 | 4.1 | 0.025 | 0.025 | 0.000 |
| ZN-8 | 4.69 | 7.1 | 4.3 | 0.022 | 0.026 | 0.003 |
| ZN-9 | 4.89 | 7.3 | 4.4 | 0.023 | 0.026 | 0.003 |
| ZN-10 | 4.74 | 12.6 | 7.7 | 0.032 | 0.034 | 0.002 |
| ZN-11 | 4.575 | 12.6 | 7.8 | 0.031 | 0.034 | 0.004 |
| ZN-12 | 4.92 | 13.9 | 8.4 | 0.035 | 0.036 | 0.001 |
| ZN-13 | 4.765 | 22.4 | 13.6 | 0.045 | 0.045 | 0.000 |

Table 6C. Calculated Δρ Values for Table 5C Resins using Eq. 4

| Sample | PDI | SCB/1000 TC | SCB/PDI$^n$ | Measured Δρ (g/cm$^3$) | Calculated Δρ (g/cm$^3$) | Absolute Residual |
|---|---|---|---|---|---|---|
| Cr-1 | 10.4 | 14.0 | 6.6 | 0.036 | 0.032 | 0.004 |
| Cr-2 | 16.6 | 5.59 | 2.3 | 0.023 | 0.019 | 0.004 |
| Cr-3 | 19.0 | 3.4 | 1.3 | 0.015 | 0.014 | 0.000 |
| Cr-4 | 36.5 | 2.6 | 0.8 | 0.010 | 0.012 | 0.001 |
| Cr-5 | 53.7 | 2.1 | 0.6 | 0.010 | 0.010 | 0.000 |
| Cr-6 | 66.1 | 1.6 | 0.4 | 0.008 | 0.009 | 0.001 |
| Cr-7 | 73.1 | 0.9 | 0.2 | 0.007 | 0.007 | 0.000 |
| Cr-8 | 79.1 | 2.0 | 0.5 | 0.010 | 0.009 | 0.001 |

Table 6D. Calculated Δρ Values for Table 5D Resins using Eq. 4

| Sample | PDI | SCB/1000 TC | SCB/PDI$^n$ | Measured Δ ρ (g/cm$^3$) | Calculated Δρ (g/cm$^3$) | Absolute Residual |
|---|---|---|---|---|---|---|
| MET-16 | 3.1 | 19.5 | 13.6 | 0.044 | 0.045 | 0.001 |
| BM ZN-1 | 14.0 | 1.6 | 0.7 | 0.010 | 0.011 | 0.001 |
| DMTE-1 | 14.5 | 1.5 | 0.6 | 0.009 | 0.010 | 0.002 |
| DMTE-2 | 25.3 | 1.7 | 0.6 | 0.008 | 0.010 | 0.002 |

Table 7. Calculated Copolymer Densities for Samples in Tables 5A to 5D

| Sample | Measured Copolymer ρ (g/cm$^3$) | Calculated Copolymer ρ (g/cm$^3$) | Absolute Residual |
|---|---|---|---|
| MTE-1 | 0.947 | 0.945 | 0.001 |
| MTE-2 | 0.942 | 0.944 | 0.002 |

(continued)

| Sample | Measured Copolymer ρ ($g/cm^3$) | Calculated Copolymer ρ ($g/cm^3$) | Absolute Residual |
|---|---|---|---|
| MTE-3 | 0.937 | 0.936 | 0.001 |
| MTE-4 | 0.933 | 0.935 | 0.003 |
| MTE-5 | 0.933 | 0.935 | 0.002 |
| MTE-6 | 0.936 | 0.935 | 0.001 |
| MTE-7 | 0.931 | 0.930 | 0.001 |
| MTE-8 | 0.917 | 0.917 | 0.000 |
| MTE-9 | 0.916 | 0.915 | 0.001 |
| MTE-10 | 0.916 | 0.918 | 0.002 |
| MTE-11 | 0.913 | 0.912 | 0.001 |
| MTE-12 | 0.918 | 0.917 | 0.001 |
| MTE-13 | 0.902 | 0.903 | 0.001 |
| MTE-14 | 0.897 | 0.898 | 0.001 |
| MTE-15 | 0.880 | 0.880 | 0.000 |
| ZN-1 | 0.947 | 0.946 | 0.000 |
| ZN-2 | 0.944 | 0.945 | 0.001 |
| ZN-3 | 0.944 | 0.944 | 0.000 |
| ZN-4 | 0.944 | 0.943 | 0.001 |
| ZN-5 | 0.944 | 0.943 | 0.001 |
| ZN-6 | 0.929 | 0.928 | 0.001 |
| ZN-7 | 0.937 | 0.937 | 0.000 |
| ZN-8 | 0.936 | 0.932 | 0.003 |
| ZN-9 | 0.935 | 0.931 | 0.003 |
| ZN-10 | 0.926 | 0.924 | 0.002 |
| ZN-11 | 0.927 | 0.923 | 0.004 |
| ZN-12 | 0.924 | 0.923 | 0.001 |
| ZN-13 | 0.915 | 0.914 | 0.000 |
| Cr-1 | 0.925 | 0.929 | 0.004 |
| Cr-2 | 0.937 | 0.941 | 0.004 |
| Cr-3 | 0.944 | 0.944 | 0.000 |
| Cr-4 | 0.950 | 0.949 | 0.001 |
| Cr-5 | 0.950 | 0.950 | 0.000 |
| Cr-6 | 0.950 | 0.949 | 0.001 |
| Cr-7 | 0.951 | 0.951 | 0.000 |
| Cr-8 | 0.952 | 0.953 | 0.001 |
| MET-16 | 0.912 | 0.910 | 0.001 |
| BM ZN-1 | 0.948 | 0.947 | 0.001 |
| DMTE-1 | 0.950 | 0.949 | 0.002 |
| DMTE-2 | 0.951 | 0.950 | 0.002 |

As mentioned earlier the SCBD profile was not taken into account in Equation 4. However, the results shown in Table 7 suggested that the slope of the SCBD had negligible contributions to the calculated density change for the samples tested (at least within the error of the calculation). This was evident from the narrower PDI, metallocene catalyzed samples where the SCBD slopes for resins in Table 5A were equal to 0 compared to 6.5 for sample MTE-16 from Table 5D. The density difference observed for sample MTE-16 (0.044 $g/cm^3$) was comparable to the other MET sample with similar SCB/($PDI^n$) values (i.e., between 10 and 14). A similar argument can be made for sample listed in Table 5B and 5C where the slopes varied considerably, yet the density change in all these samples were captured using the SCB/$(PDI)^n$ term and Equation 4.

Finally, the negligible contributions of the SCBD slope to the density change were also demonstrated for the three bimodal resins tested, BM ZN-1, DMTE-1 & 2 shown in Table 5D. These three samples are comparable to mono-modal samples having slopes steep enough to dissect the resin. This was illustrated by considering what happens in a broad Gaussian MWD (PDI = 14) when the slope was systematically changed as shown in Figure 19. In this plot the slope was increased from 0 to 3 so that the sample had a reversed SCBD. As a result, the steeper slope produced a sample where half the polymer was essentially homopolymer and the other half was copolymer, just as in the bimodal samples. The fact that the three bimodal resins have SCB/(PDI)$^n$ and $\Delta p$ values similar to the Cr-6,7 & 8 samples, which have flat SCBDs, further confirms the use of Equations 3 and 4 to calculate the copolymer virtual density for samples with complex MWD and SCBD profiles.

**EXAMPLE 5 Calculating Density Change for Digital MWD and SCB Data**

Example 5 demonstrates the use of this invention to calculate the density of a polyethylene copolymer using reported structural values such as Mw, PDI and SCB content, coupled with the use of digitally generated MW and SCB distributions. Structural data reported by Mirabella et al., Journal of Polymer Science, Part B, 40 (2002) 1637. for a set of metallocene (MET) catalyzed polyethylene copolymers and their calculated homopolymer densities are shown in Table 8. Without the benefit of having the samples in hand to physically measure MWD and SCB, digitally generated MWD curves were used assuming a normal Gaussian for the molecular weight distribution for each sample reported in Table 8. Furthermore, since these samples are metallocene catalyzed, a flat SCBD can be assigned across the MWD having the value of the reported SCB level. As can be seen for this example, using this digital approach and reported data, the densities of such samples can be readily calculated. The virtually calculated densities as described compared very well with those measured values reported by Mirabella. Also noteworthy, these samples contained ethyl branches arising from the incorporation of 1-butene comonomers, which further illustrates that the applicability of the method for SCB's is not limited by type of comonomer.

Table 8. Calculated Density of Copolymers using Digital MWD and SCB Data

| Sample | Reported Mw (kg/mol) | Reported PDI | Reported SCB/1000 TC | Calculated Homopolymer ρ (g/cm$^3$) | Reported Copolymer ρ (g/cm$^3$) | Calculated Copolymer ρ (g/cm$^3$) | Absolute Density Residual |
|---|---|---|---|---|---|---|---|
| M-6 | 108 | 2.2 | 18.5 | 0.958 | 0.910 | 0.911 | 0.001 |
| M-5 | 75 | 2.5 | 25.3 | 0.962 | 0.905 | 0.909 | 0.004 |
| M-4 | 81 | 2.2 | 30.7 | 0.961 | 0.900 | 0.901 | 0.001 |
| M-3 | 98 | 2.1 | 43.9 | 0.958 | 0.888 | 0.886 | 0.002 |
| M-2 | 137 | 2.4 | 51.4 | 0.956 | 0.880 | 0.879 | 0.001 |
| M-1 | 63 | 2.3 | 84.6 | 0.963 | 0.865 | 0.865 | 0.000 |

**EXAMPLE 6 Calculating Density Change Across the MWD**

The contribution of SCB to density change as calculated by Equation 4 used data acquired for the bulk or whole polymer by using SCB values from NMR or SEC-FTIR and MW and MWD data obtained from SEC. However this equation could also be used to calculate the whole polymer density in a slice by slice fashion using SEC-FTIR data. As in the case of the calculated homopolymer density, the density of a copolymer sample was assumed to be the summation of the densities across the molecular weight distribution. Consequently, the measured copolymer density was obtained by first calculating the homopolymer value for each slice using Equation 3, subtracting the calculated density change due to the presence of SCB (using Equation 4) and subsequently summing the resulting density values over the MWD as previously described in Equation 2 and reiterated below;

$$1/\rho = \sum (w_i / \rho_i) = \int \frac{1}{\rho}\left(\frac{dw}{d\log m}\right) d\log M \qquad \text{(Eq. 2)}$$

where: $\rho = Eq.3 - Eq.4$

This approach was tested using SEC-FTIR data for selected resins previously described in Table 5A to 5D. In order to calculate the respective densities for each MW slice in the structural profiles acquired by SEC-FTIR, the experimental data was first reproduced in a continuous fashion. This was done because the reported SCB level is a result of co-added spectra, and therefore not every MW slice has a corresponding SCB value. Furthermore, experimental SCB data are often missing at the extreme ends of the MWD due to signal noise issues. The portion of the MWD missing SCB data can be up to around 20 % of the total MWD profile. These points were illustrated in SEC-FTIR data presented in Figures 17 and 18.

In the first step, a set of narrow MW, Schulz-Flory Distributed (SFD) MWD profiles (PDI approximately 2) was used to fit the MWD profile. For the MWD given in Figure 20, seven SFD peaks were used as shown in Figure 21. It was possible to use other peak shapes and employ more than seven peaks. However, the various aspects of this invention comprise reproducing the MWD as accurately as possible with a minimum number of peaks. Therefore seven Schulz-Flory Distributed (SFD) peaks appeared to be adequate. In the next step, the experimental SCB profile was reproduced by using an additional set of SFDs. This second set of SFDs had the same MWD profiles (including the peak MW of each peak), however, an arbitrary (but constant) SCB amount with a flat SCBD was assigned to each peak. The experimental SCBD was matched by digitally adding weight fractions of peaks from each set across the MWD.

For example, in one aspect a metallocene catalyzed resin with a MWD that could be represented by a single SFD product and had a flatly distributed SCB level of 6 SCB/1000 TC, both the experimental MWD and SCBD data were reproduced by digitally adding 0.5 times the data slice of the "homopolymer" SFD peak to 0.5 times the slice data of the "copolymer" SFD peak, where the latter had a flatly distributed SCB level of 12 SCB/1000 TC. Of course if the copolymer peak is assigned a SCB level of 24 SCB/1000 TC, only a 0.25 "weight fraction" will be needed. Both the experimental and fitted data are given in Figure 21. Although an exact fit for the SCBD at the tails of the MWD was not achieved (undoubtedly, the SCBD could be matched exactly if more Schulz-Flory distributions were used), the data reported in Figure 21 demonstrated that good agreement between measured density and calculated density data is obtained using this approach even for complex MWD and SCBD profiles. Typically, MWD derived from SEC-FTIR have a slightly broader PDI due to the large injection volume used. This latter observation may add about 0.001 g/cm$^3$ to the final calculated density.

It is also possible to predict SCB from known densities and then assign SCB levels in order to hit a specific density target. This is particularly useful in catalyst and resin design where it is known how a particular system incorporates comonomer and is also useful in addressing "what if" scenarios using digital data. For example, the SCB needed to achieve a particular density at a particular MW and MWD was calculated by using equation 5. This equation was reached by re-plotting and fitting the change in density and SCB data as SCB/PDI$^n$ verses the change in density:

$$SCB/PDI^{n} = C_1(\Delta\rho)^{C_2} + C_3(\Delta\rho)^{C_4} \qquad \text{(Eq. 5)}$$

Where:

| | |
|---|---|
| C1 | 1780.355946 |
| C2 | 137.0649808 |
| C3 | 7196.543644 |
| C4 | 2.026750223 |
| n | 0.318975556 |

Fitted (model) and experimental values using this approach are shown in Figure 22 and illustrate the goodness of fit of this approach. In particular, this approach is very useful when addressing 'what if" scenarios in resin design. Using the density value obtained from the MWD (i.e., the homopolymer density) and Equation 5, the density of any combination of MW, MWD or SCB and SCBD can be calculated from digital data. This approach should also find use when addressing comonomer incorporations at catalyst sites.

**EXAMPLE 7 Estimating Polyethylene Melting Points**

Many polyethylene homopolymers and copolymer properties were calculated from density. For example, the melting point ($T_m$) of a polyethylene sample was calculated from a calibration curve based on $T_m$ and density data reported in the literature (Patel and Mirabella studies, R. M. Patel, K. Sehanobish,P. Jain, S. P. Chum, G. W. Knight, J. Appl. Poly. Sci. 1996, 60, 749; F. M. Mirabella, A. Bafna, Journal of Polymer Science, Part B: Polymer Physics 2002, 40,1637.), as well as assigned values for 100% amorphous and crystalline polyethylene samples. Several values for the density of both phases have been reported in the literature. In this aspect, amorphous phase polyethylene was assigned a 0.852 g/cm$^3$ density (Jordens, G. L Wilkes, J. Janzen, D. C. Rohlfing, M. B. Welch, Polymer 2000, 41, 7175.) at 20 °C and crystalline polyethylene a density value of 1.01 g/cm$^3$ at its equilibrium melting temperature ($T_m^0$). Figure 23 shows the empirical calibration curve (solid line) relating density to melting point values compared to respective values reported in the cited references. Assigned values of 20 °C and 142.5 °C were given for density values of 0.852 g/cm$^3$ and 1.01 g/cm$^3$, respectively.

The plot in Figure 23 showed a reasonable relationship between density values and the average melting points ($T_m$, °C) described by the fitted line. The fitted melting point from the calibration curve for the 1.01 g/cm$^3$ density was found to be equal to 142.3 °C and was well within the reported uncertainty (L, Mandelkern, G. M. Stack, Macromolecules 1984, 17, 871.) of the referenced $T_m^0$ (141.5 ± 1 °C). The calibration curve provided estimates of $T_m$ for the respective density at each MW slice. As in the density calculations, a summation of the slice by slice data weighted by the weight fractions ($w_i$) of the various components that make up the MWD profile yielded the respective $T_m$ value for the whole polymer.

**EXAMPLE 8 Calculating Polymer Crystallinity**

In another aspect, polymer crystallinity was calculated using known relationships between polymer crystallinity and density. For example, the weight and volume fraction crystallinity was calculated from the polymers density using the following equations:

where: $\phi_c = w_c(\rho/\rho_c)$ $w_c$ weight fraction crystallinity
$\rho$ = calculated density of bulk polymer from summation on a slice by slice basis
$\rho_c$ = density of 100% crystalline sample (assigned 1.01 g/cm$^3$)
$\rho_a$ = density of amorphous phase (0.852 g/cm$^3$)
$\phi_c$ = volume fraction crystallinity

Moreover, since density values were calculated directly from any MWD or SCB level, digital data was used to estimate what one might expect from a proposed MWD and SCBD. For example, by simply using a Gaussian curve shape for the polymer's MWD and a flat SCBD, the crystallinity for metallocene catalyzed polyethylene polymers was calculated using reported $M_w$, $M_n$ and SCB values found in the literature. In Figure 24, reported data for weight fraction crystallinity (Stadler et al; e-polymers 2009, no 040) are compared to calculated values derived as described above. As shown in Figure 24, a good correlation exists between the measured and calculated values.

In Figure 24 crystallinity values obtained from both WAX (open black circles) and density measurements (open blue circles) for polyethylene samples as reported by Stadler ( *e-polymers* **2009,** no 040) are compared to calculated values. Also shown are crystallinity data reported by Mirabella (Journal of Polymer Science, Part B: Polymer Physics 2002, 40,1637) obtained from both DSC (open triangles) and XRD measurements (solid triangles) and compared to calculated values. Lastly, data reported by Bartczak (Polymer 2005, 46, 8210) obtained from DSC (solid diamonds) and density measurements (open squares) are also shown and compared to calculated values to within ± 0.05. The dotted lines in this plot denote the ± 0.05 deviations away from the ideal 1 to 1 correlation given as the solid (red) line.

Figure 25 illustrates a direct relationship between density and weight fraction crystallinity. In Figure 25, the direct, non linear relationship between density and weight fraction crystallinity is given and compared to reported values taken directly from the referenced literature works.

**EXAMPLE 9 Calculating *PSP2* Values**

In US Patent Application Publication 2007298508 A1 primary structures such as molecular weight and short chain branching, as well as their respective distributions, were used to formulate a single parameter *(PSP2)* capable of rapidly estimating the potential slow crack growth resistance of polyethylene resins as determined by short term testing methods. This method was based on experimental data obtained directly from SEC-FTIR, bulk density values, and statistical calculations for tie molecule probabilities as described by Huang & Brown. The statistically acquired probability value was treated essentially as a weighing factor ($P_i$) for each slice of the MWD. $P_i$ was arbitrarily multiplied x100 and subsequently defined as $PSP2_i$. The summation of ($w_iPSP2_i$) across the MWD profile defined *PSP2* for a particular resin. However, knowledge of both the sample's SCB level and the sample's density was needed in order to estimate the effects of SCB on the samples density. With this present invention, effects of SCB on the samples density and subsequently *PSP2* values can be calculated directly from either experimental or digital MWD and SCB data without prior knowledge of the sample density.

The calculations of $P_i$ principally rely on density estimates on a MW slice by slice basis, from which subsequent estimates of melting point and lamella thickness were made in order to obtain the critical chain end-to-end distance required to form a tie chain (i.e., $2\ell_c + \ell_a$) $\boldsymbol{a}_s$ described by Huang & Brown. We found that the effects of primary structure on density and corresponding $T_m$ values can be empirically calculated across the molecular weight distribution to within average values of ± 0.002 g/cm$^3$ and ± 2 °C, respectively. From these values and known relationships such as the Gibbs-Thompson and percent crystallinity equations, values for $2\ell_c + \ell_a$ were approximated. The calculated thicknesses for both $\ell_c$ and $\ell_a$ appear to be consistent with those reported in the literature when assessed using comparable values for $\rho_c$, $\rho_a$ and $T_m^0$. Figure 26 illustrates the process for and typical data obtained from PSP2 calculations.

**EXAMPLE 10 Calculating Natural Draw Ratios**

Finally, calculated *PSP2* values were used to estimate a sample's Natual Draw Ratio (NDR) using PSP values and the correlation plot shown in Figure 27 as previously shown in US Patent Application Publication 2007298508 A1. Figure 27 illustrates calculated *PSP2* values to estimate a sample's Natural Draw Ratio (NDR) using PSP values and the correlation plot.

Having the ability to predict density gives one access to predicting polymer tensile properties such as NDR, as mentioned above, or other tensile properties such as Young's modulus, yield strength and yield strength using known corrections (e.g., J. Janzen & D. Register; Annual Technical Conference - Society of Plastics Engineers (1996), 54th(Vol. 2), 2190-2194) from the literature as shown below, or any combination thereof.

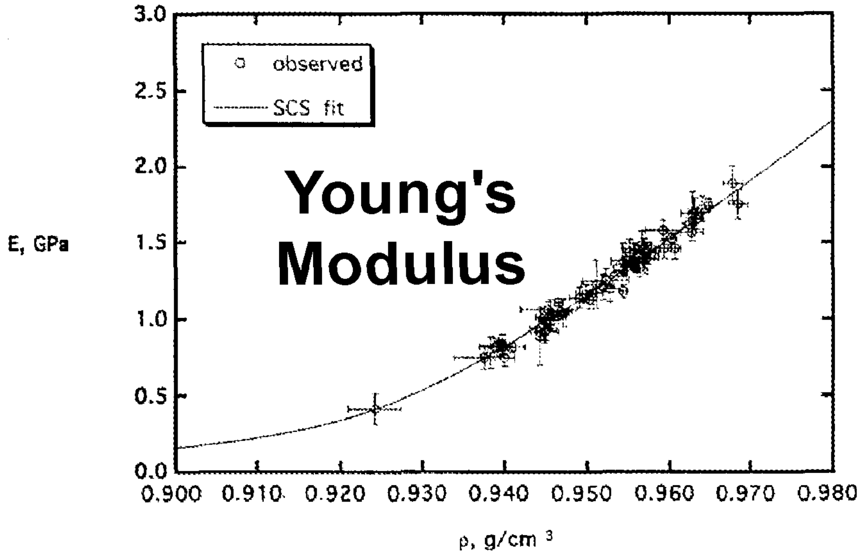


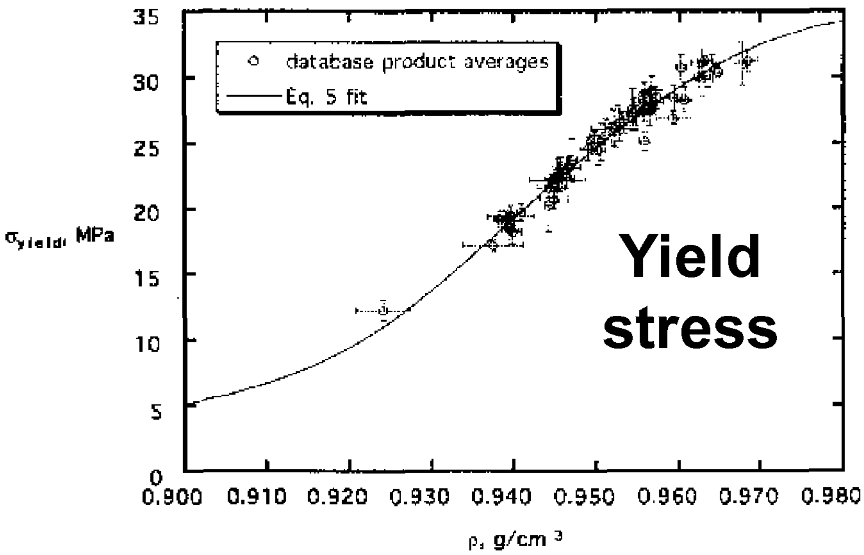

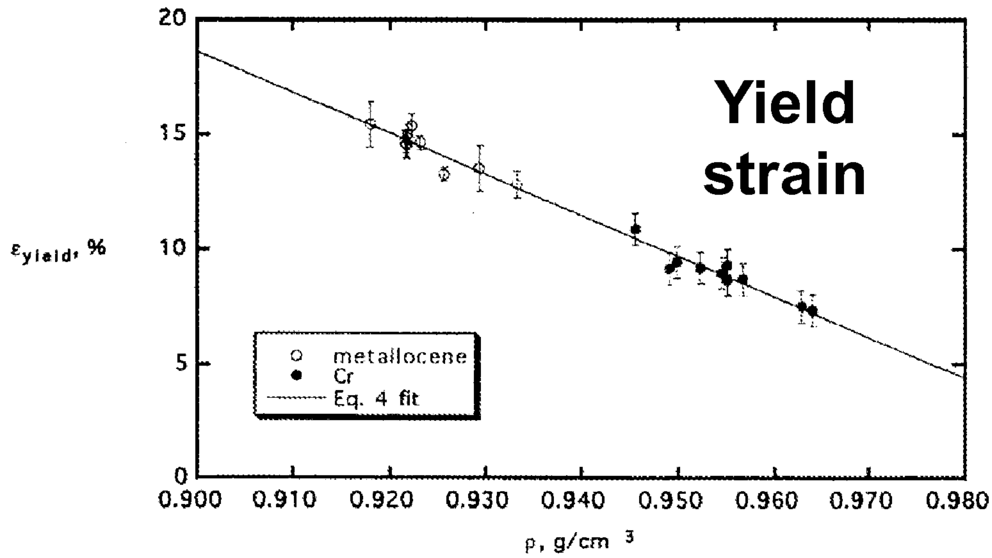


A particular application of this method is the visualization of structures and their expected mechanical properties. Others have shown the crystallinity (density) dependence of modulus and yield properties in polyethylene. Furthermore, we have shown that many stress crack related tests (such as the Pennsylvania Notch Test (PENT), Single Point Notched Constant Tensile Load (SP-NCTL), and Natural Draw Ratio (NDR)), can be directly related to structural parameters derived from MWD, SCB levels and density data (Des Lauriers P.J., Polyolefins 2006 Conference Proceeding). Given the ability to now predict the density of any combination of MWD and SCBD, various structures can now be digitally evaluated for their potential application in a particular product line. Moreover by selecting peaks with PDIs similar to those found in metallocene catalyzed resins, the possibility exists to make actual resins through physical blending that correspond to digitally constructed resins with particular MW and SCB distributions.

## Claims

1. A method to determine a virtual density of a polymer having short chain branches (SCB) comprising:

   a). determining a plurality of density values as a function of a Molecular Weight (MW) and a Molecular Weight Distribution (MWD) profile of the polymer wherein each of the plurality of density values is determined at a different MW location across the MWD profile; and
   b). adjusting the plurality of density values for a SCB contribution to density suppression to obtain an adjusted density value; ; and
   c). summing the adjusted density values to obtain a virtual density; wherein the SCB, MW and the MWD comprise data obtained as measured properties, data provided as a digitally determined value, data obtained by curve fitting the data obtained as measured properties, data provided as an arbitrarily assigned value or a combination thereof, the method **characterised in that** in step b) the plurality of density values is adjusted using bulk SCB data and size exclusion chromatography (SEC) polydispersity values for a variety of 1-hexene copolymer samples with various architectures.

2. The method of Claim 1 wherein the MW, the MWD, or a combination thereof comprises SEC, GPC, NMR or SEC/FTIR data.

3. The method of Claim 1 wherein the virtual density of the polymer is in a range of from about 0.906g/cm$^3$ to about 1.01 g/cm$^3$.

4. The method of Claim 1 wherein the polymer is a homopolymer or copolymer with mono-modal or bimodal architecture or a blend of homopolymers, copolymers or a combination thereof.

5. The method of Claim 1 wherein the polymer is an olefin.

6. The method of Claim 1 wherein the polymer comprises a comonomer.

7. The method of Claim 6 wherein the comonomer is 1-hexene, 1-octene, 1-butene, 1-pentene, 1-decene, styrene, or a combination thereof.

8. The method of Claim 1 wherein the polymer is semi-crystalline.

9. The method of Claim 1 wherein the MWD comprises Schultz-Flory Distributed MWD profiles.

10. The method of any one of Claims 1 to 9 performed in association with a polymerization reactor.

**Patentansprüche**

1. Verfahren zum Bestimmen einer virtuellen Dichte eines Polymers mit Kurzkettenverzweigungen (Short Chain Branches - SCB), Folgendes umfassend:

   a). Bestimmen mehrerer Dichtewerte als eine Funktion von Molekulargewicht (Molecular Weight - MW) und eines Profils der Molekulargewichtsverteilung (Molecular Weight Distribution - MWD) des Polymers, wobei jeder der mehreren Dichtewerte an einer anderen MW-Stelle entlang des MWD-Profils bestimmt wird; und
   b). Einstellen der mehreren Dichtewerte für einen SCB-Beitrag zur Dichteunterdrückung, um einen eingestellten Dichtewert zu erhalten; und
   c). Summieren der eingestellten Dichtewerte, um eine virtuelle Dichte zu erhalten; wobei SCB, MW und MWD als Messwerte ermittelte Daten, als ein digital bestimmter Wert bereitgestellte Daten, durch Kurvenanpassung der als Messwerte erhaltenen Daten erhaltene Daten, als ein willkürlich zugeordneter Wert bereitgestellte Daten oder eine Kombination aus diesen umfassen, wobei das Verfahren **dadurch gekennzeichnet ist, dass** in Schritt b) die mehreren Dichtewerte mit Massen-SCB-Daten und Größenausschlusschromatographie (Size Exclusion Chromatography - SEC)-Polydispersitätswerten für verschiedene 1-Hexen-Copolymerproben mit verschiedenen Architekturen eingestellt werden.

2. Verfahren nach Anspruch 1, wobei das MW, die MWD oder eine Kombination aus diesen Daten aus SEC, GPC, NMR oder SEC/FTIR umfasst.

3. Verfahren nach Anspruch 1, wobei die virtuelle Dichte des Polymers in einem Bereich von etwa 0,906 $g/cm^3$ bis etwa 1,01 $g/cm^3$ liegt.

4. Verfahren nach Anspruch 1, wobei das Polymer ein Homopolymer oder ein Copolymer mit monomodaler oder bimodaler Architektur oder eine Mischung aus Homopolymeren, Copolymeren oder einer Kombination aus diesen ist.

5. Verfahren nach Anspruch 1, wobei das Polymer ein Olefin ist.

6. Verfahren nach Anspruch 1, wobei das Polymer ein Comonomer umfasst.

7. Verfahren nach Anspruch 6, wobei das Comonomer 1-Hexen, 1-Octen, 1-Buten, 1-Penten, 1-Decen, Styrol oder eine Kombination davon ist.

8. Verfahren nach Anspruch 1, wobei das Polymer semikristallin ist.

9. Verfahren nach Anspruch 1, wobei die MWD Schulz-Flory-verteilte MWD-Profile umfasst.

10. Verfahren nach einem der Ansprüche 1 bis 9, ausgeführt in Verbindung mit einem Polymerisierungsreaktor.

**Revendications**

1. Procédé de détermination d'une densité virtuelle d'un polymère contenant comportant de courtes ramifications de chaîne (SCB), comprenant :

   a). la détermination d'une pluralité de valeurs de densité en fonction d'une Masse moléculaire (MW) et d'un profil de Distribution de masses moléculaires (MWD) du polymère, chacune des valeurs de densité de la pluralité étant déterminée pour un emplacement de MW à travers le profil de MWD ; et
b). l'ajustement de la pluralité de valeurs de densité pour une contribution de SCB vis-à-vis de la suppression de densité pour obtenir une valeur ajustée de densité ; et
c). la sommation des valeurs de densité ajustées pour obtenir une densité virtuelle ; où SCB, MW et le MWD comprennent des données obtenues comme des propriétés mesurées, des données obtenues comme une valeur déterminée numériquement, des données obtenues par ajustement de courbe des données obtenues comme des propriétés mesurées, des données fournies comme une valeur attribuée arbitrairement ou comme une combinaison de celles-ci, le procédé **se caractérisant en ce qu'**à l'étape b), la pluralité de valeurs de densité est ajustée à l'aide de données de SCB brutes et de valeurs de polydispersité par chromatographie d'exclusion diffusion (SEC) pour un certain nombre d'échantillons de copolymères de type 1-hexène à diverses architectures.

**2.** Procédé selon la revendication 1, dans lequel la MW, la MWD ou une combinaison de celles-ci comprend des données de SEC, de CPG, de RMN ou de SEC/FTIR.

**3.** Procédé selon la revendication 1, dans lequel la densité virtuelle du polymère est comprise entre environ 0,906 g/cm$^3$ et environ 1,01 g/cm$^3$.

**4.** Procédé selon la revendication 1, dans lequel le polymère est un homopolymère ou un copolymère à architecture monomodale ou bimodale ou un mélange d'homopolymères, de copolymères ou une combinaison de ceux-ci.

**5.** Procédé selon la revendication 1, dans lequel le polymère est une oléfine.

**6.** Procédé selon la revendication 1, dans lequel le polymère contient un comonomère.

**7.** Procédé selon la revendication 6, dans lequel le comonomère est le 1-hexène, le 1-octène, le 1-butène, le 1-pentène, le 1-décène, le styrène ou une combinaison de ceux-ci.

**8.** Procédé selon la revendication 1, dans lequel le polymère est semi-cristallin.

**9.** Procédé selon la revendication 1, dans lequel la MWD comprend des profils à MWD distribuée selon Schultz-Flory.

**10.** Procédé selon l'une quelconque des revendications 1 à 9 effectué en association avec un réacteur de polymérisation.

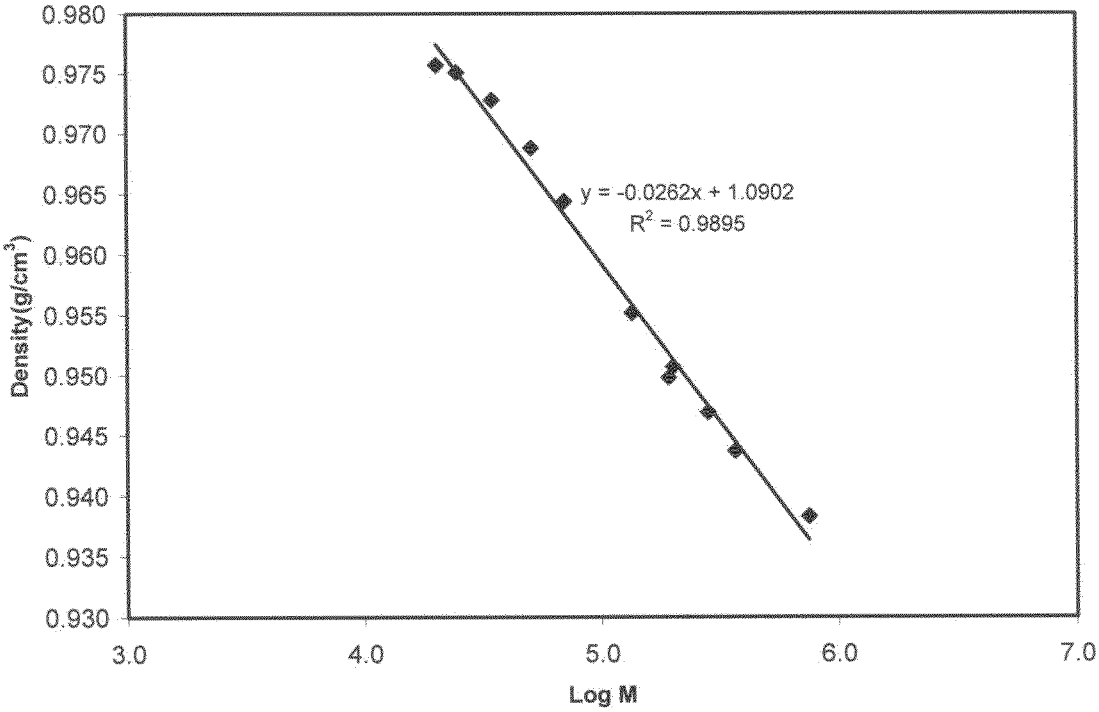
0.980
0.975
0.970
0.965
0.960
0.955
0.950
0.945
0.940
0.935
0.930
Density(g/cm3)
y = -0.0262x + 1.0902
R2 = 0.9895
3.0
4.0
5.0
6.0
7.0
Log M

FIG. 1

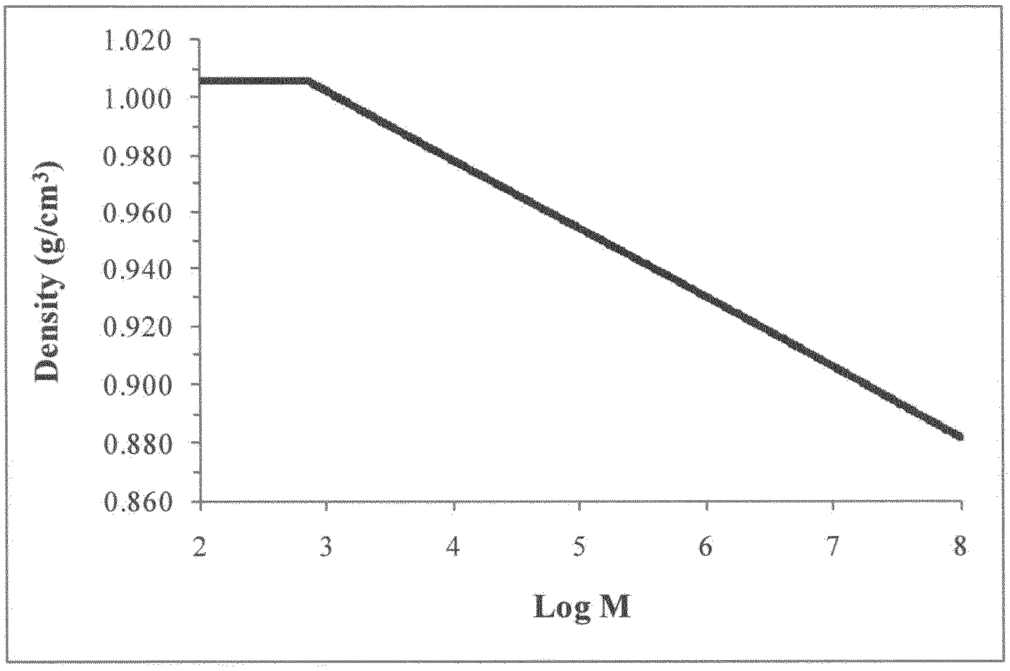
1.020
1.000
0.980
0.960
0.940
0.920
0.900
0.880
0.860
Density (g/cm³)
2
3
4
5
6
7
8
Log M

FIG. 2

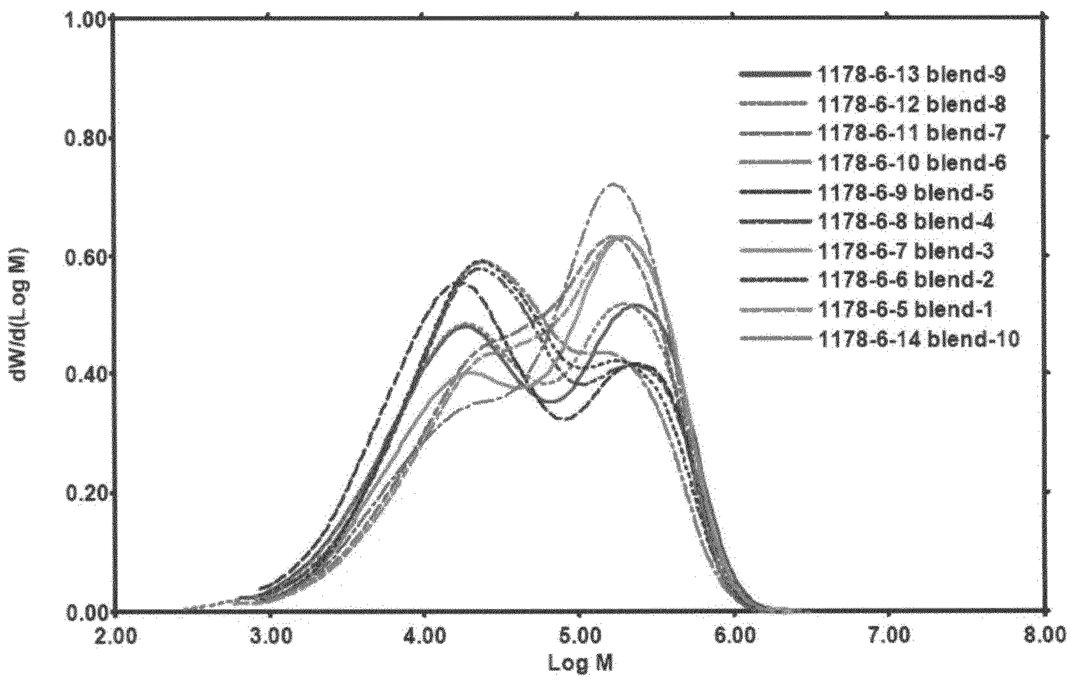
1.00
0.80
0.60
0.40
0.20
0.00
dW/d(Log M)
2.00
3.00
4.00
5.00
6.00
7.00
8.00
Log M
1178-6-13 blend-9
1178-6-12 blend-8
1178-6-11 blend-7
1178-6-10 blend-6
1178-6-9 blend-5
1178-6-8 blend-4
1178-6-7 blend-3
1178-6-6 blend-2
1178-6-5 blend-1
1178-6-14 blend-10

FIG. 3

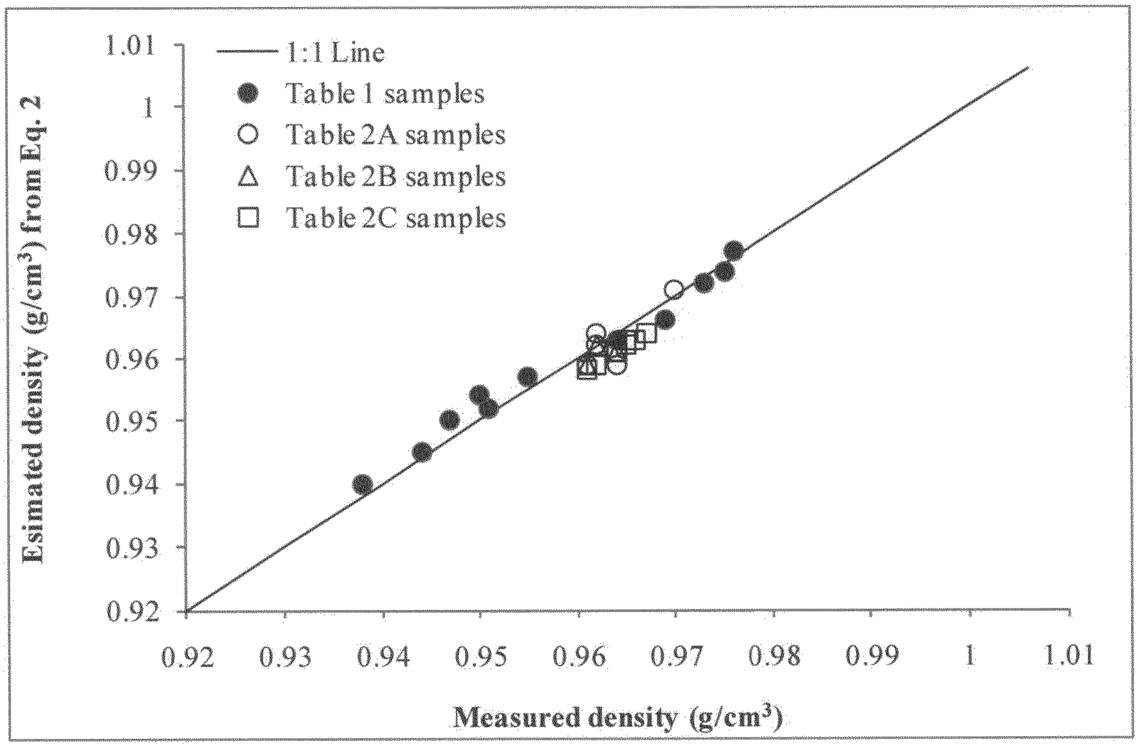
1:1 Line
Table 1 samples
Table 2A samples
Table 2B samples
Table 2C samples
Esimated density (g/cm3) from Eq. 2
Measured density (g/cm3)
1.01
1
0.99
0.98
0.97
0.96
0.95
0.94
0.93
0.92
0.92
0.93
0.94
0.95
0.96
0.97
0.98
0.99
1
1.01

FIG. 4

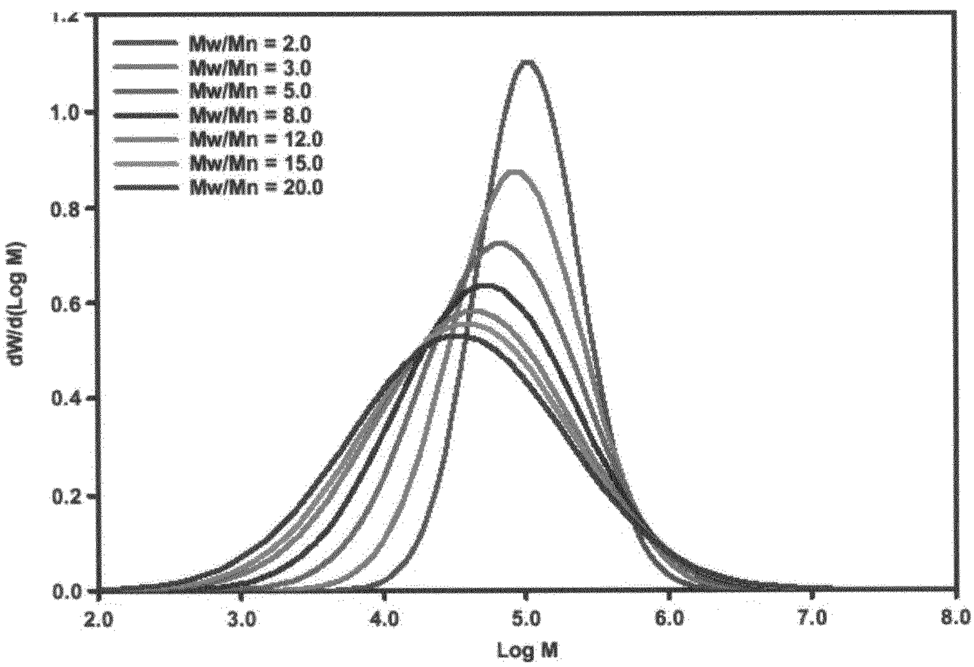
Mw/Mn = 2.0
Mw/Mn = 3.0
Mw/Mn = 5.0
Mw/Mn = 8.0
Mw/Mn = 12.0
Mw/Mn = 15.0
Mw/Mn = 20.0
dW/d(Log M)
Log M
0.0
0.2
0.4
0.6
0.8
1.0
2.0
3.0
4.0
5.0
6.0
7.0
8.0

FIG. 5

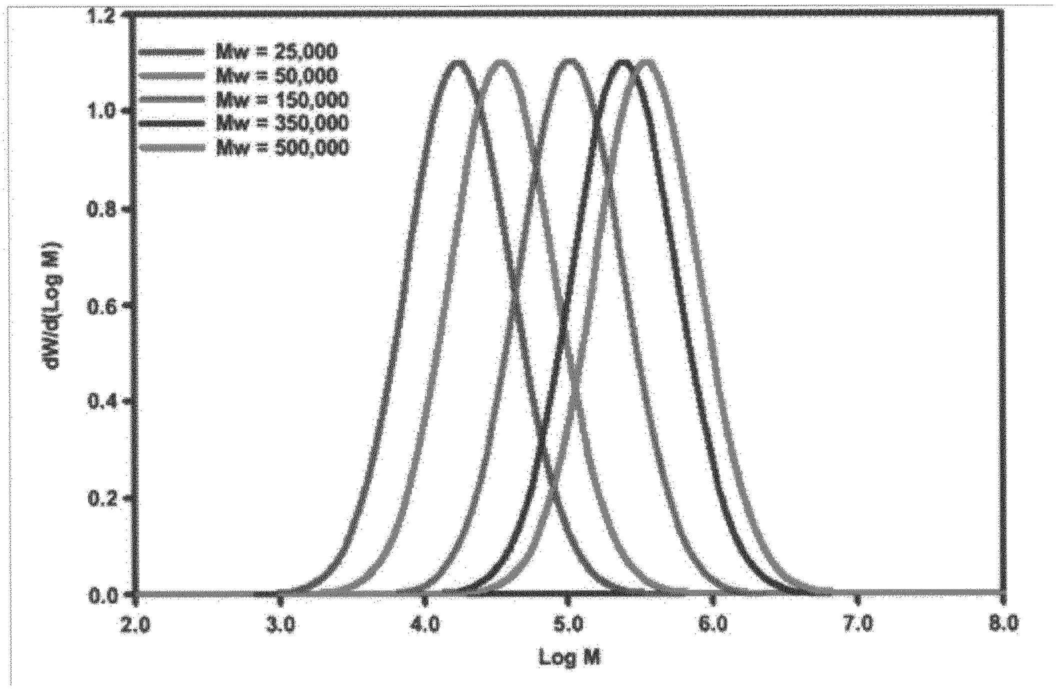
1.2
1.0
0.8
0.6
0.4
0.2
0.0
dW/d(Log M)
Mw = 25,000
Mw = 50,000
Mw = 150,000
Mw = 350,000
Mw = 500,000
2.0
3.0
4.0
5.0
6.0
7.0
8.0
Log M

FIG. 6

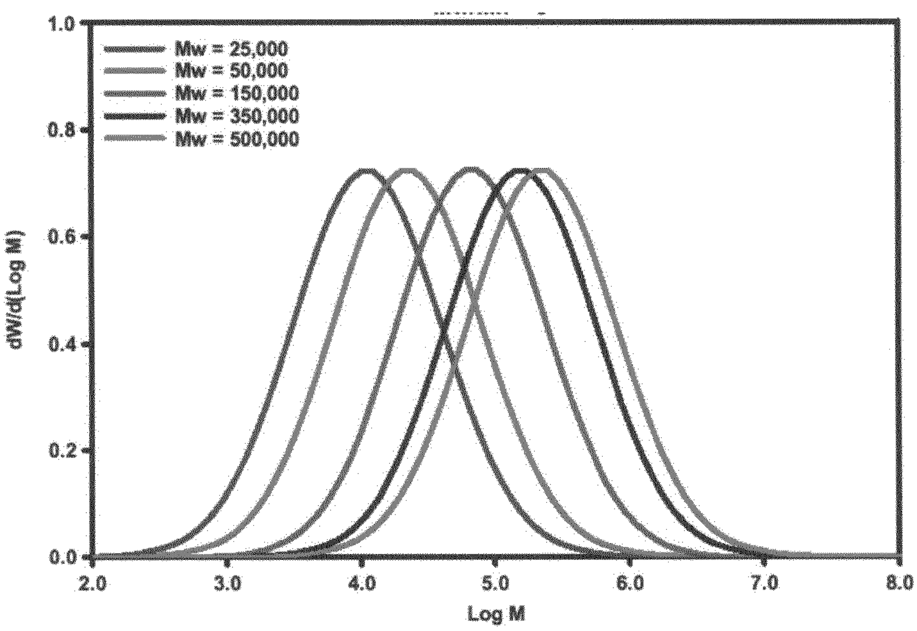
1.0
0.8
0.6
0.4
0.2
0.0
dW/d(Log M)
Mw = 25,000
Mw = 50,000
Mw = 150,000
Mw = 350,000
Mw = 500,000
2.0
3.0
4.0
5.0
6.0
7.0
8.0
Log M

FIG. 7

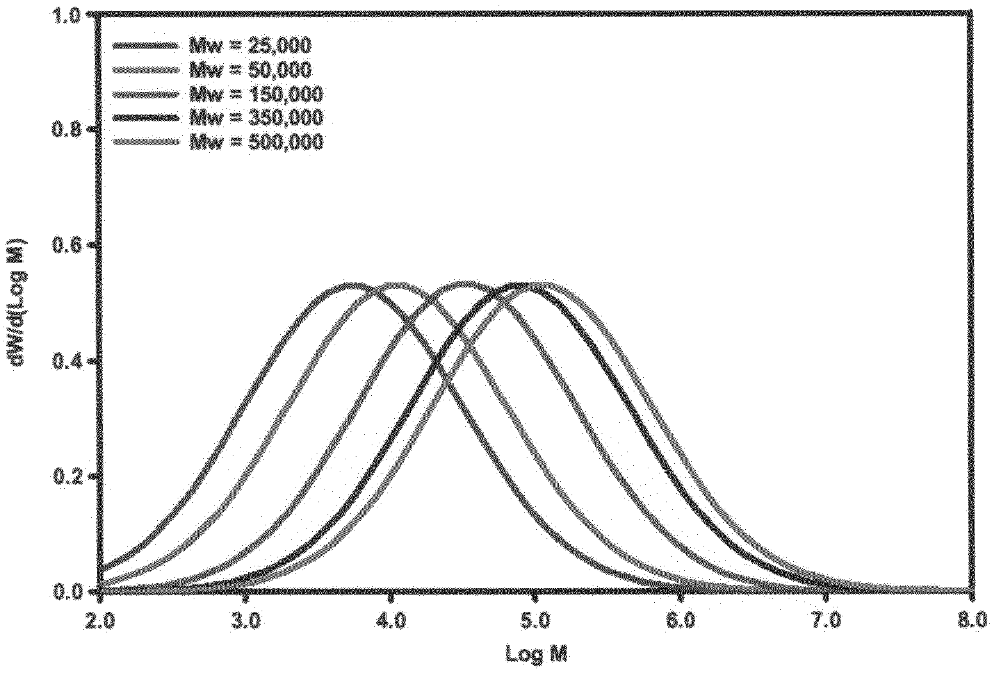
Mw = 25,000
Mw = 50,000
Mw = 150,000
Mw = 350,000
Mw = 500,000
dW/d(Log M)
1.0
0.8
0.6
0.4
0.2
0.0
2.0
3.0
4.0
5.0
6.0
7.0
8.0
Log M

FIG. 8

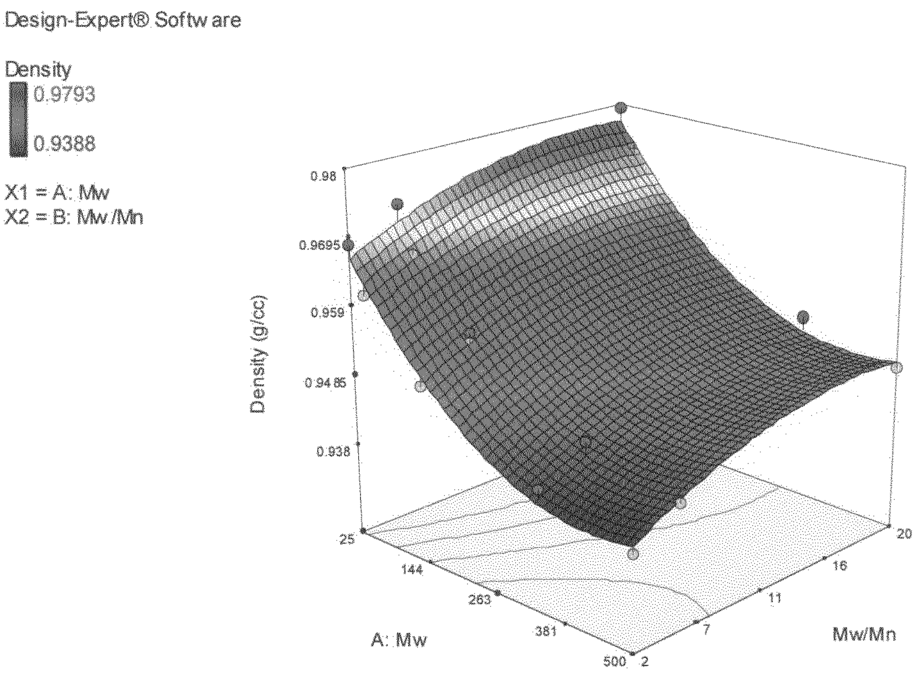
Design-Expert® Software
Density
0.9793
0.9388
X1 = A: Mw
X2 = B: Mw/Mn
Density (g/cc)
0.98
0.9695
0.959
0.9485
0.938
25
144
263
381
500
A: Mw
2
7
11
16
20
Mw/Mn

FIG. 9

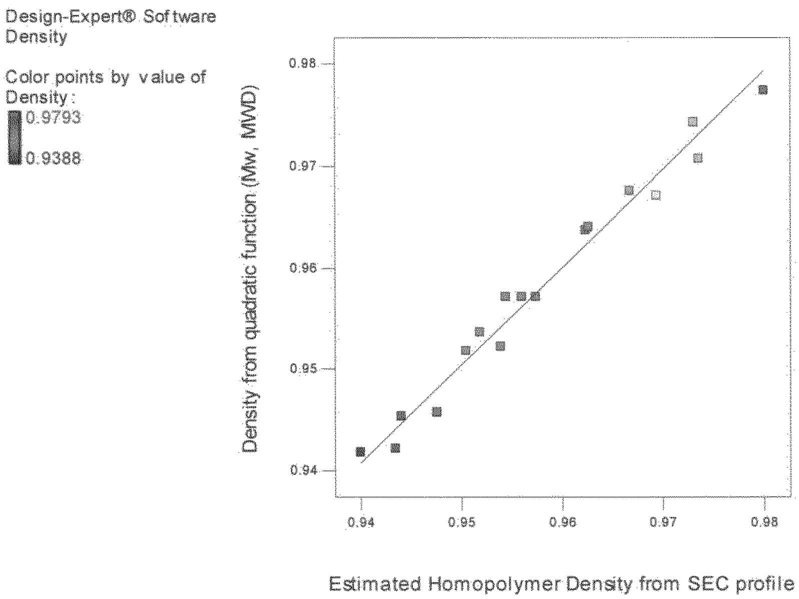


**ANOVA for Response Surface Quadratic Model**

Response 1 Density

Analysis of variance table [Partial sum of squares - Type III]

| Source | Sum of Squares | df | Mean Square | F Value | p-value Prob > F | |
|---|---|---|---|---|---|---|
| Model | 2.17E-03 | 5 | 4.34E-04 | 92.366785 | < 0.0001 | significant |
| A-Mw | 1.50E-03 | 1 | 1.50E-03 | 319.57514 | < 0.0001 | |
| B-Mw/Mn | 2.65E-04 | 1 | 2.65E-04 | 56.452995 | < 0.0001 | |
| AB | 1.51E-08 | 1 | 1.51E-08 | 0.0032035 | 0.9559 | |
| A^2 | 2.04E-04 | 1 | 2.04E-04 | 43.485921 | < 0.0001 | |
| B^2 | 1.30E-05 | 1 | 1.30E-05 | 2.7721062 | 0.1241 | |
| Residual | 5.17E-05 | 11 | 4.70E-06 | | | |
| Lack of Fit | 4.72E-05 | 9 | 5.25E-06 | 2.32769 | 0.3366 | not significant |
| Pure Error | 4.51E-06 | 2 | 2.25E-06 | | | |
| Cor Total | 2.22E-03 | 16 | | | | |

| | | | |
|---|---|---|---|
| Std. Dev. | 0.002168205 | R-Squared | 0.9767 |
| Mean | 0.957082353 | Adj R-Squared | 0.9662 |
| C.V. % | 0.226543152 | Pred R-Squared | 0.9409 |
| PRESS | 0.000131417 | Adeq Precision | 29.013135 |

**FIG. 10**

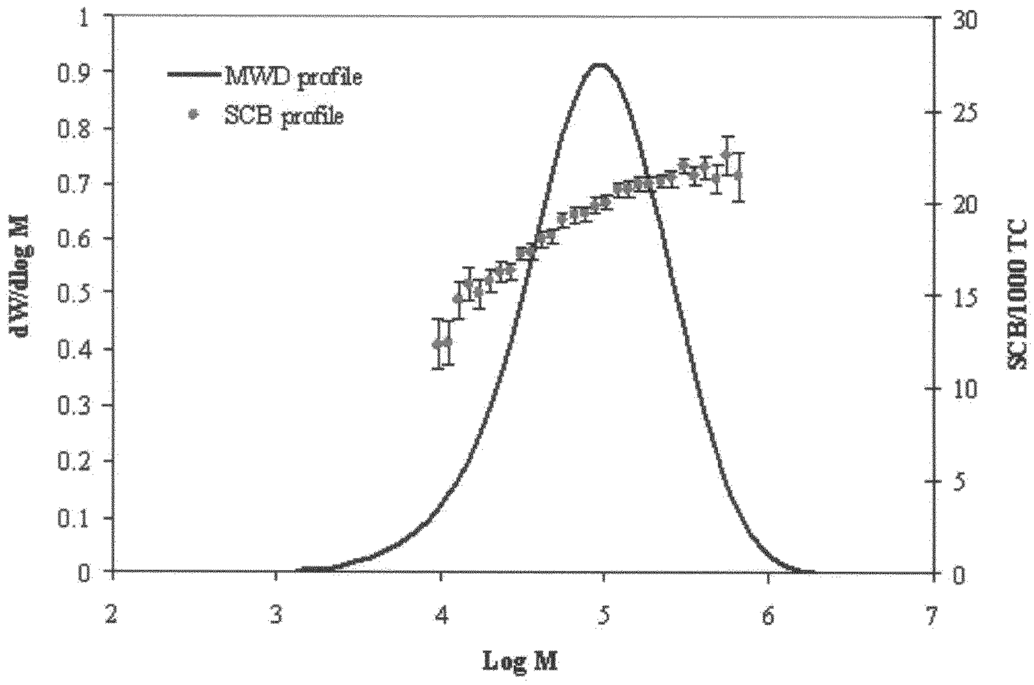
MWD profile
SCB profile
dW/dlog M
SCB/1000 TC
Log M
0
0.1
0.2
0.3
0.4
0.5
0.6
0.7
0.8
0.9
1
0
5
10
15
20
25
30
2
3
4
5
6
7

FIG. 11

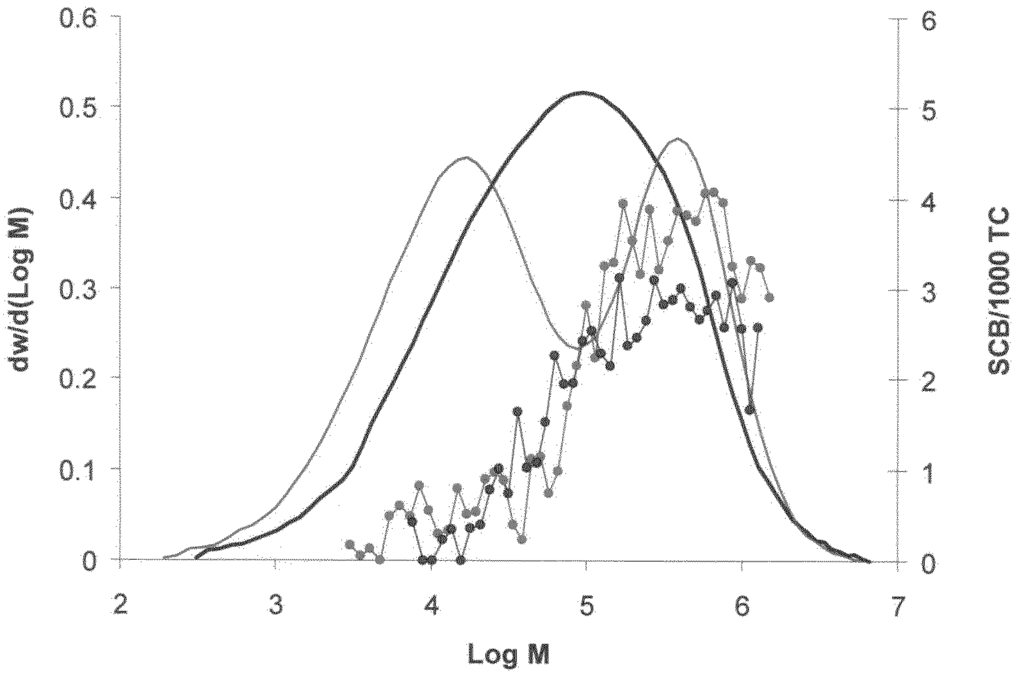


FIG. 12

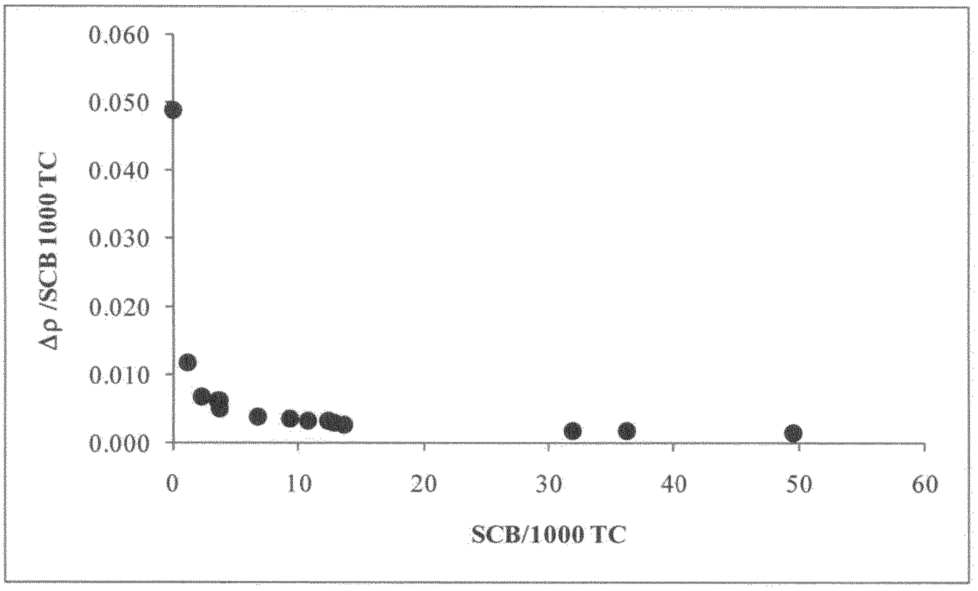
0.060
0.050
0.040
0.030
0.020
0.010
0.000
Δρ /SCB 1000 TC
0
10
20
30
40
50
60
SCB/1000 TC

FIG. 13

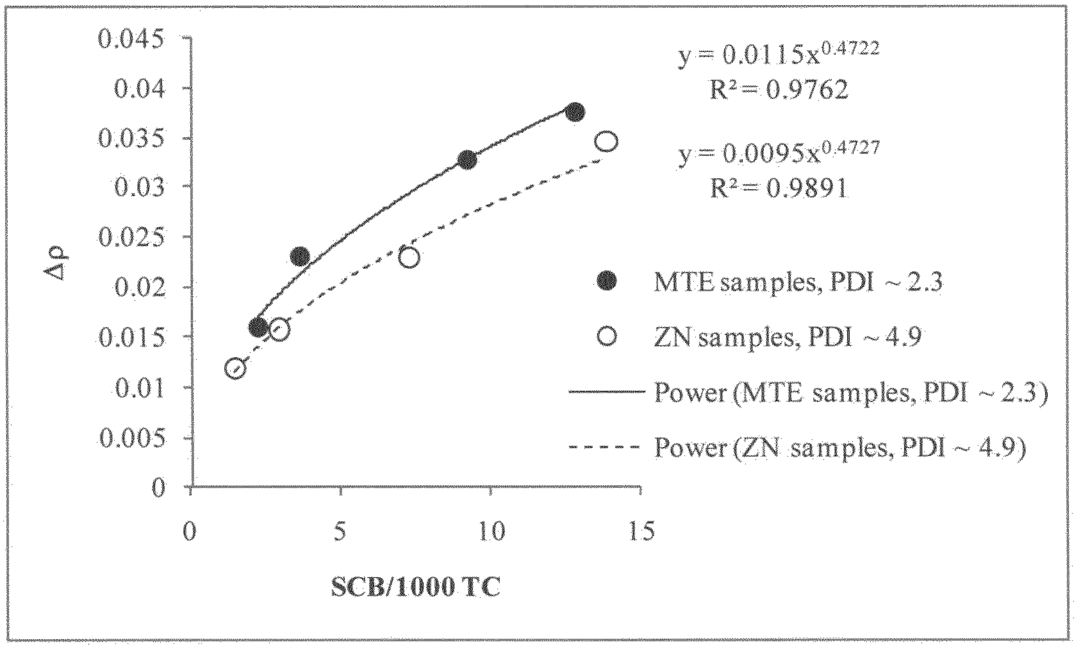

0.045
0.04
0.035
0.03
0.025
0.02
0.015
0.01
0.005
0
Δρ
0
5
10
15
SCB/1000 TC
y = 0.0115x^0.4722
R² = 0.9762
y = 0.0095x^0.4727
R² = 0.9891
MTE samples, PDI ~ 2.3
ZN samples, PDI ~ 4.9
Power (MTE samples, PDI ~ 2.3)
Power (ZN samples, PDI ~ 4.9)


FIG. 14

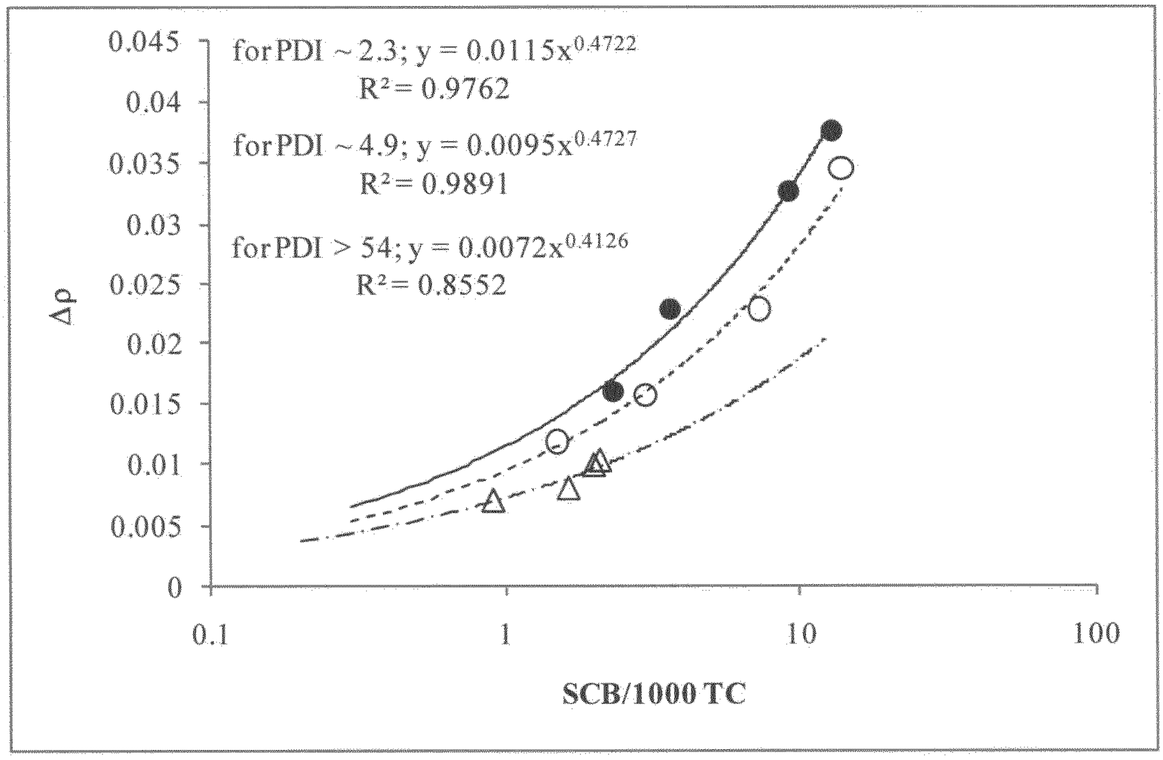
for PDI ~ 2.3; y = 0.0115x^0.4722
R² = 0.9762
for PDI ~ 4.9; y = 0.0095x^0.4727
R² = 0.9891
for PDI > 54; y = 0.0072x^0.4126
R² = 0.8552
0.045
0.04
0.035
0.03
0.025
0.02
0.015
0.01
0.005
0
Δρ
0.1
1
10
100
SCB/1000 TC

FIG. 15

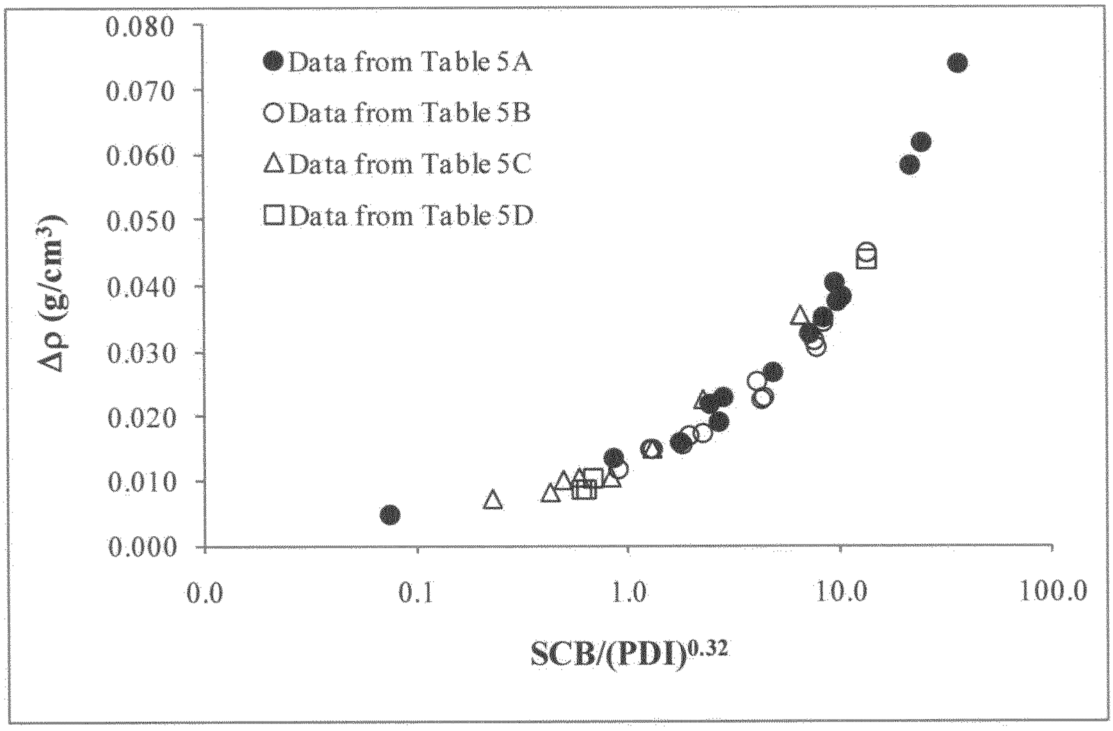
0.080
0.070
0.060
0.050
0.040
0.030
0.020
0.010
0.000
Δρ (g/cm3)
Data from Table 5A
Data from Table 5B
Data from Table 5C
Data from Table 5D
0.0
0.1
1.0
10.0
100.0
SCB/(PDI)0.32

FIG. 16

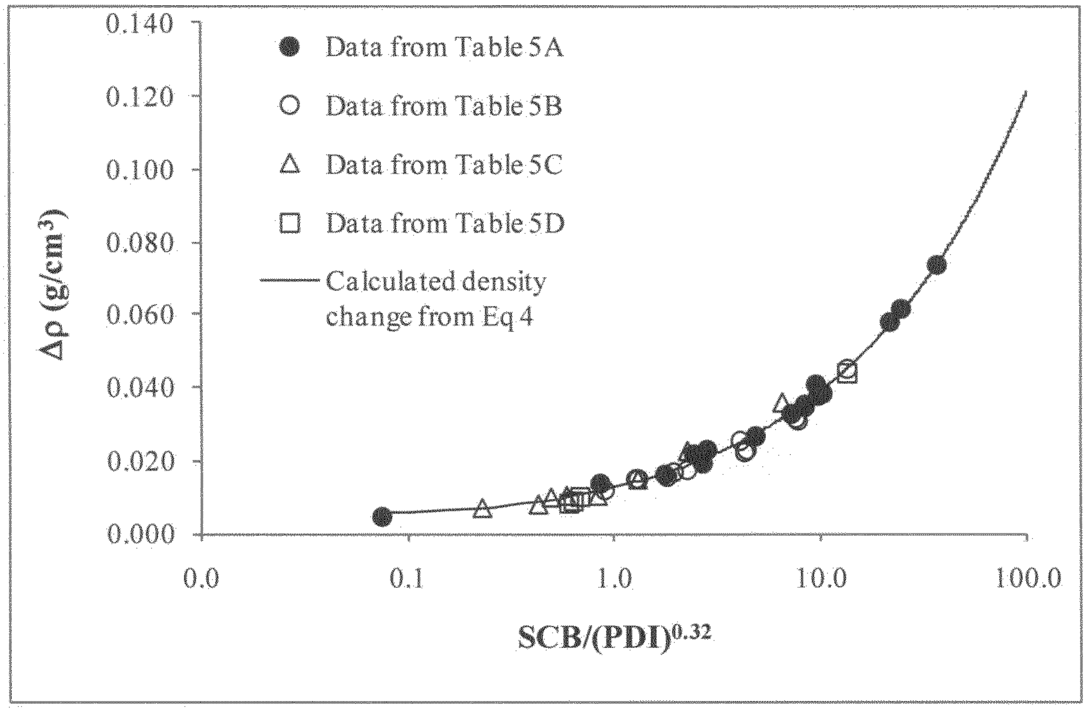
0.140
0.120
0.100
0.080
0.060
0.040
0.020
0.000
Δρ (g/cm³)
Data from Table 5A
Data from Table 5B
Data from Table 5C
Data from Table 5D
Calculated density change from Eq 4
0.0
0.1
1.0
10.0
100.0
SCB/(PDI)^0.32

FIG. 17

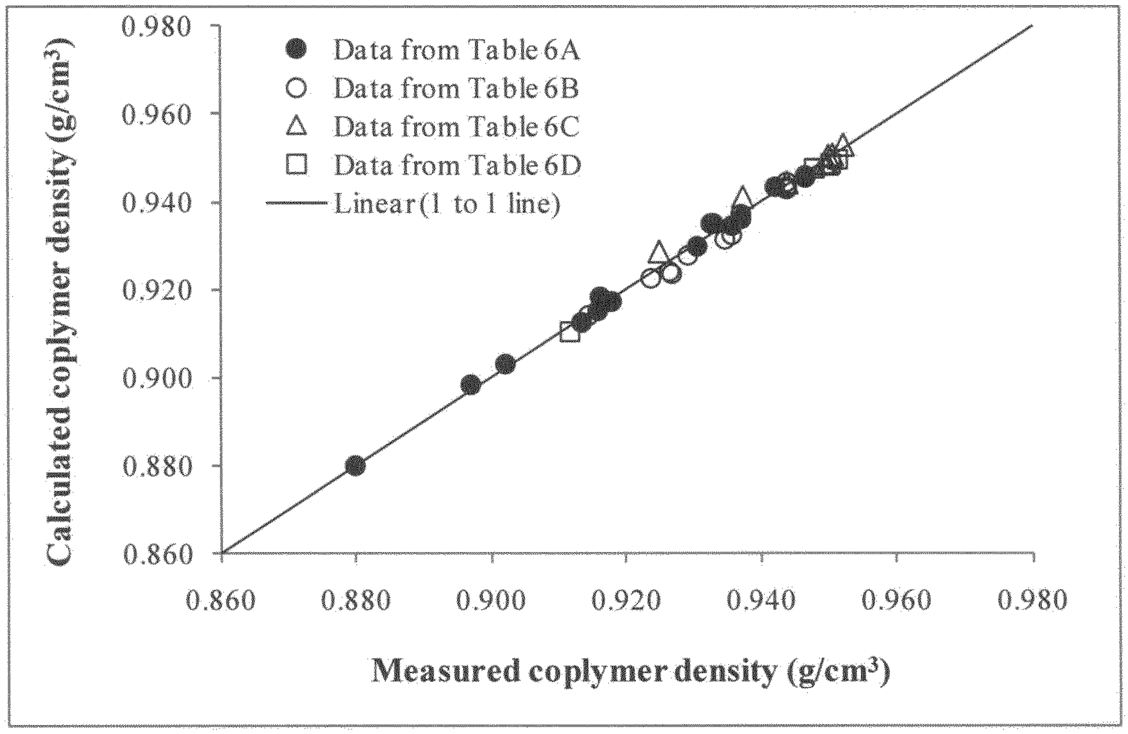
0.980
0.960
0.940
0.920
0.900
0.880
0.860
Data from Table 6A
Data from Table 6B
Data from Table 6C
Data from Table 6D
Linear (1 to 1 line)
Calculated coplymer density (g/cm³)
0.860
0.880
0.900
0.920
0.940
0.960
0.980
Measured coplymer density (g/cm³)

FIG. 18

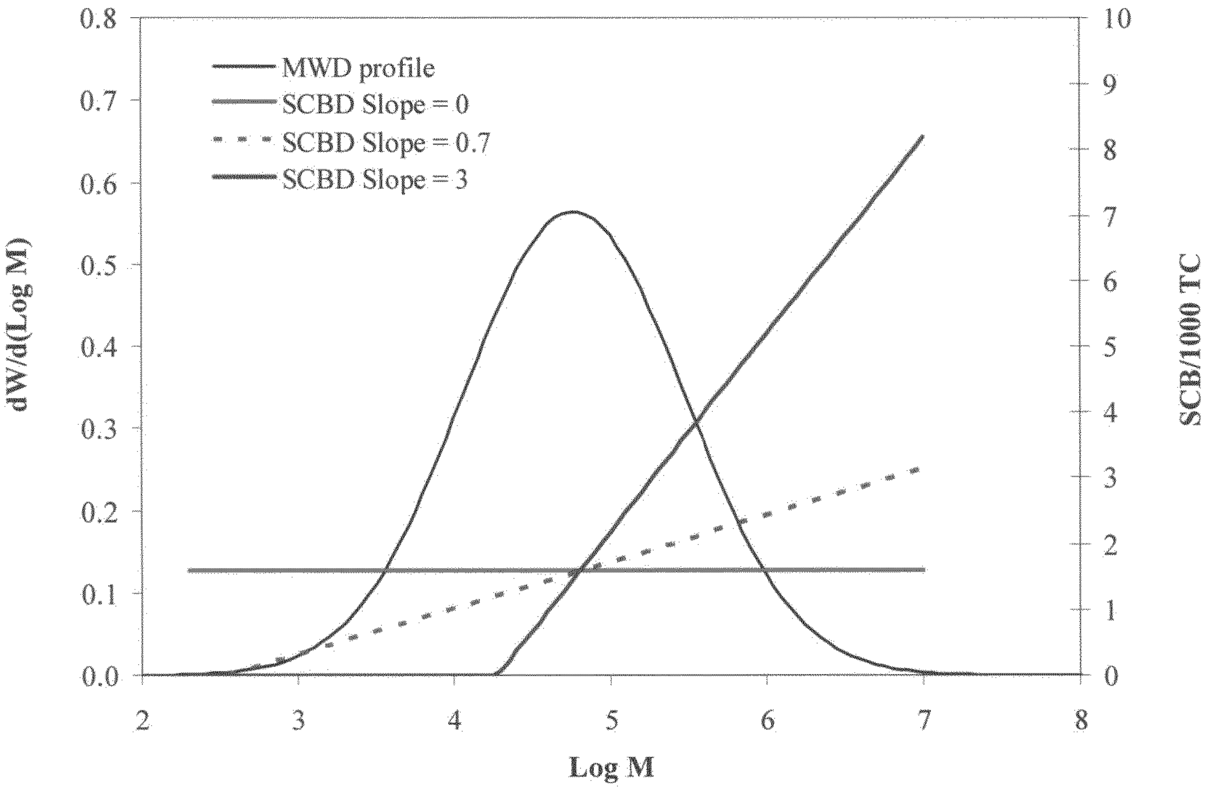
0.8
0.7
0.6
0.5
0.4
0.3
0.2
0.1
0.0
dW/d(Log M)
MWD profile
SCBD Slope = 0
SCBD Slope = 0.7
SCBD Slope = 3
10
9
8
7
6
5
4
3
2
1
0
SCB/1000 TC
2
3
4
5
6
7
8
Log M

FIG. 19

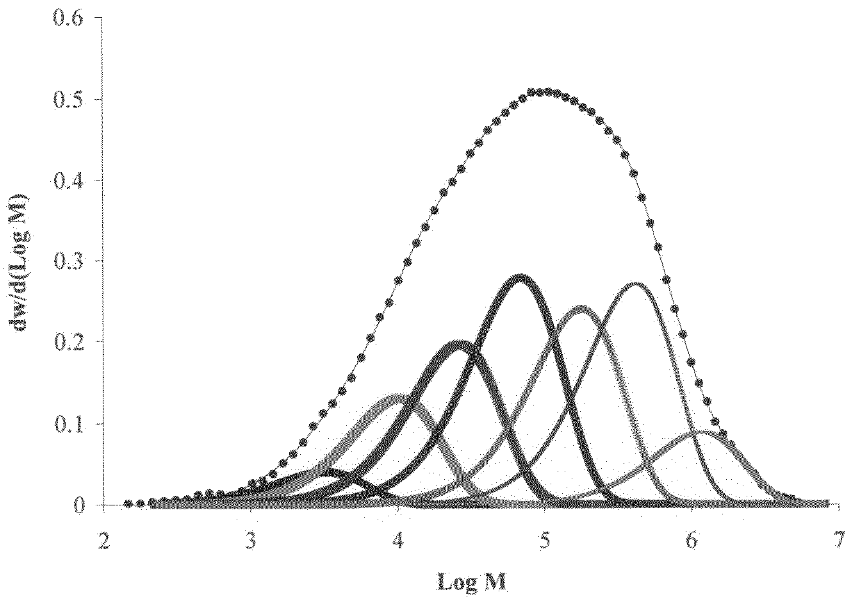


FIG. 20

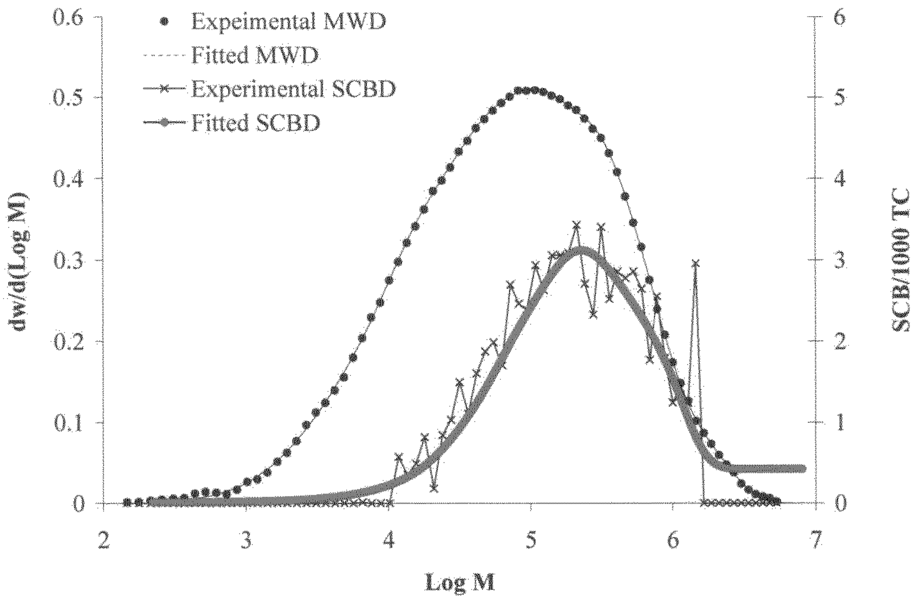
Expeimental MWD
Fitted MWD
Experimental SCBD
Fitted SCBD
dw/d(Log M)
SCB/1000 TC
Log M
0.6
0.5
0.4
0.3
0.2
0.1
0
6
5
4
3
2
1
0
2
3
4
5
6
7

FIG. 21

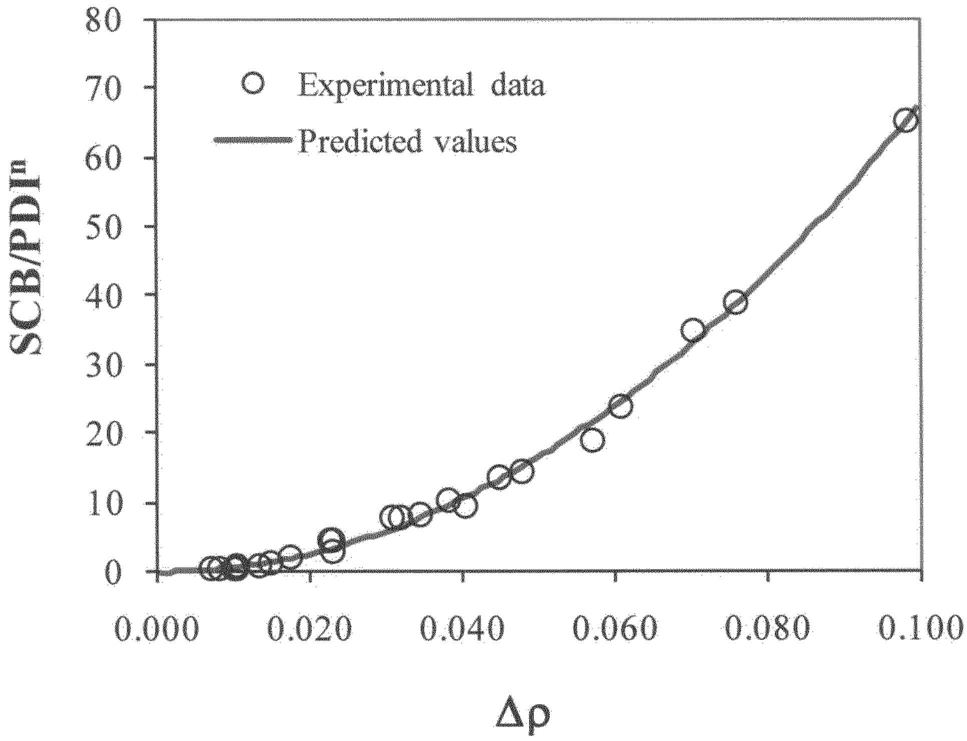
80
70
60
50
40
30
20
10
0
SCB/PDI$^n$
Experimental data
Predicted values
0.000
0.020
0.040
0.060
0.080
0.100
Δρ

**FIG. 22**

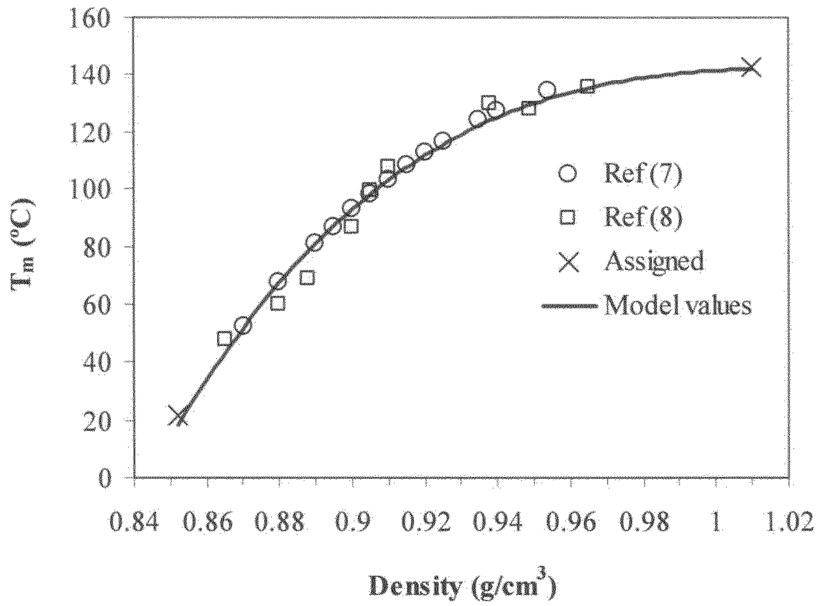
160
140
120
100
80
60
40
20
0
$T_m$ (ºC)
0.84 0.86 0.88 0.9 0.92 0.94 0.96 0.98 1 1.02
Density (g/cm$^3$)
Ref (7)
Ref (8)
Assigned
Model values

FIG. 23

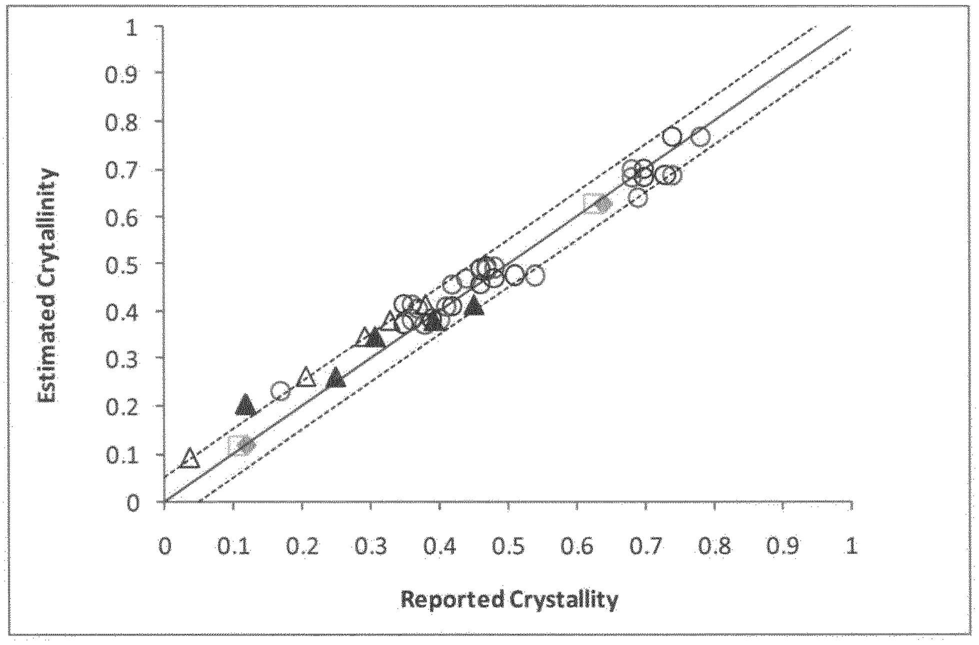
Estimated Crytallinity
Reported Crystallity
1
0.9
0.8
0.7
0.6
0.5
0.4
0.3
0.2
0.1
0
0
0.1
0.2
0.3
0.4
0.5
0.6
0.7
0.8
0.9
1

FIG. 24

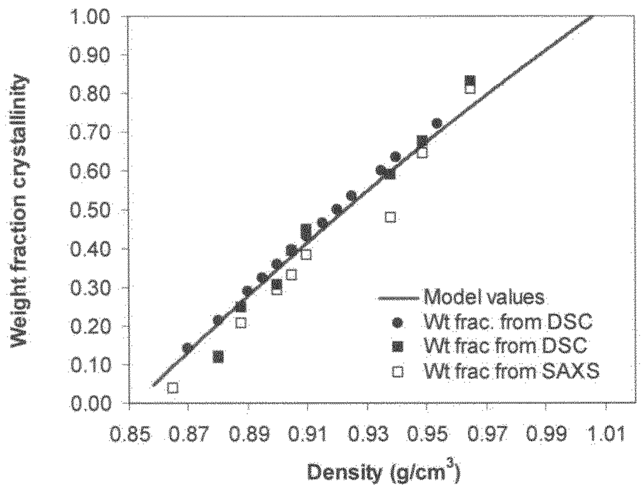


**Taken from reported data from Patel and Mirabella*

[7] R. M. Patel, K. Sehanobish, P. Jain, S. P. Chum, G. W. Knight, *J. Appl. Poly. Sci.* **1996**, *60*, 749.
[8] F. M. Mirabella, A. Bafna, *Journal of Polymer Science, Part B: Polymer Physics* **2002**, *40*, 1637.

**FIG. 25**

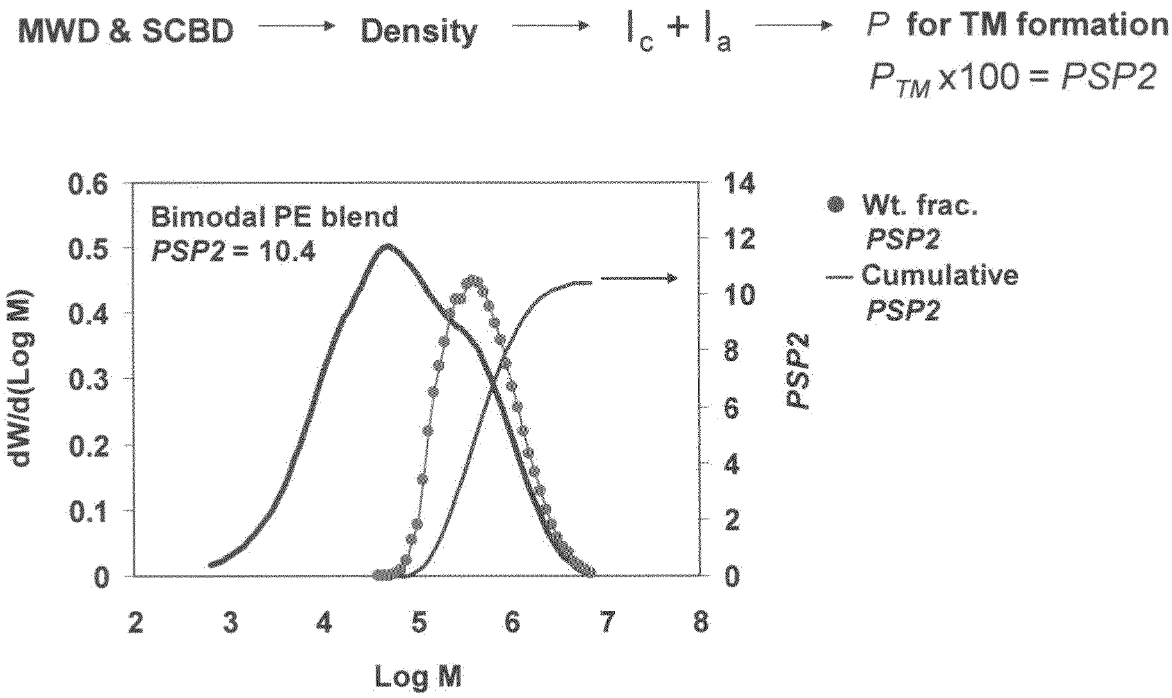
MWD & SCBD → Density → $l_c + l_a$ → P for TM formation
$P_{TM}$ x100 = PSP2
Bimodal PE blend
PSP2 = 10.4
Wt. frac. PSP2
Cumulative PSP2
dW/d(Log M)
PSP2
Log M
0.6
0.5
0.4
0.3
0.2
0.1
0
14
12
10
8
6
4
2
0
2
3
4
5
6
7
8

FIG. 26

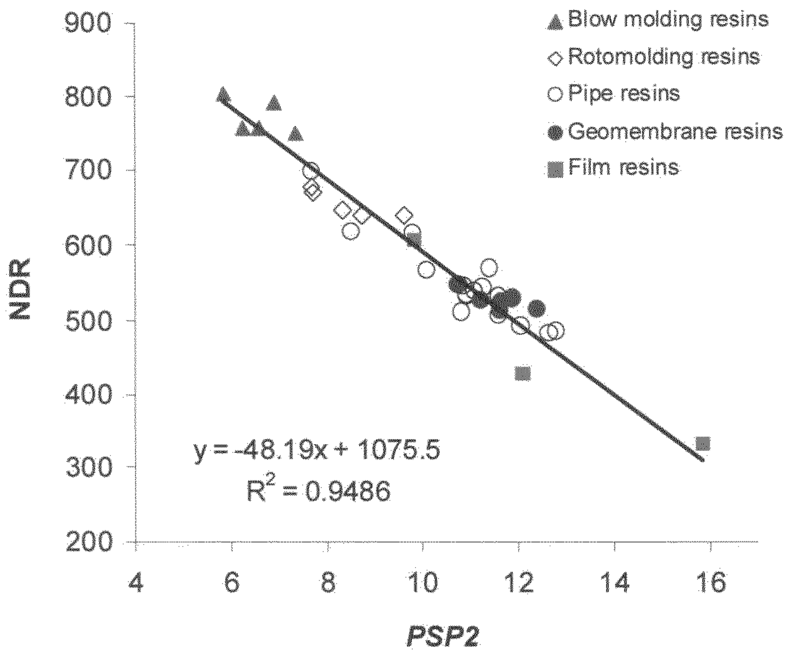
900
800
700
600
500
400
300
200
NDR
4
6
8
10
12
14
16
PSP2
Blow molding resins
Rotomolding resins
Pipe resins
Geomembrane resins
Film resins
y = -48.19x + 1075.5
R2 = 0.9486

FIG. 27

$$1/\rho = \sum w_i / \rho_i) \qquad \text{(Eq. 1)}$$

$$1/\rho = \sum(w_i / \rho_i) = \int \frac{1}{\rho}\left(\frac{dw}{dLogM}\right) dLogM$$

$$where: \ \rho = [a - bLogM] \qquad \text{(Eq. 2)}$$

$$\rho = [a - bLogM] \qquad \text{(Eq. 3)}$$

$$\Delta\rho = C_1\left(SCB/PDI^n\right)^{C_2} + C_3\left(SCB/PDI^n\right)^{C_4} \qquad \text{(Eq. 4)}$$

$$SCB/PDI^n = C_1(\Delta\rho)^{C_2} + C_3(\Delta\rho)^{C_4} \qquad \text{(Eq. 5)}$$

**FIG. 28**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2007298508 A
- US 6632680 B
- US 7056744 B
- US 2007298508 A1


### Non-patent literature cited in the description


- **J C MAJESTE et al.** *Rheol Acta,* 31 December 1998, vol. 37, 486-499
- *Journal of Polymer Science, Part B: Polymer Physics,* 2002, vol. 40, 1637
- **BARTCZAK.** *Polymer,* 2005, vol. 46, 8210
- **DESLAURIERS et al.** *Polymer,* 2002, vol. 43, 159
- **JORDENS.** *Polymer,* 2000, vol. 41, 7175
- **MIRABELLA et al.** *Journal of Polymer Science,* 2002, vol. 40, 1637
- **R. M. PATEL ; K. SEHANOBISH ; P. JAIN ; S. P. CHUM ; G. W. KNIGHT.** *J. Appl. Poly. Sci.,* 1996, vol. 60, 749
- **F. M. MIRABELLA ; A. BAFNA.** *Journal of Polymer Science, Part B: Polymer Physics,* 2002, vol. 40, 1637
- **JORDENS, G. L WILKES ; J. JANZEN ; D. C. ROHLFING ; M. B. WELCH.** *Polymer,* 2000, vol. 41, 7175
- **L, MANDELKERN ; G. M. STACK.** *Macromolecules,* 1984, vol. 17, 871
- **STADLER et al.** *e-polymers,* 2009, vol. 040
- **MIRABELLA.** *Journal of Polymer Science, Part B: Polymer Physics,* 2002, vol. 40, 1637
- **J. JANZEN ; D. REGISTER.** *Annual Technical Conference - Society of Plastics Engineers,* 1996, vol. 2 (54), 2190-2194
- **DES LAURIERS P.J.** Conference Proceeding. *Polyolefins,* 2006